# EUROPEAN PATENT APPLICATION

(11) **EP 2 881 565 A1**
(43) Date of publication of application: **10.06.2015**
(21) Application number: 14190098.5
(22) Date of filing: 23.10.2014
(51) Int. Cl.: F02D 41/00, F02D 37/02, F02N 11/04, F02N 19/00, F02D 41/06, F01L 1/344, F02D 13/02, F02B 61/02, F02M 69/04, F02N 11/08

(54) **Engine system and saddle-straddling type motor vehicle**

(30) Priority: 04.12.2013 JP 2013250980
(71) Applicant: Yamaha Hatsudoki Kabushiki Kaisha, SHIZUOKA-KEN 438-8501 (JP)
(72) Inventor: Masuda, Takahiro, Shizuoka, 438-8501 (JP); Yamaguchi, Yuki, Shizuoka, 438-8501 (JP)
(74) Representative: Zimmermann, Tankred Klaus

(57) **Abstract**

A crankshaft (13) is rotated in a forward direction until a crank angle reaches a reverse rotation starting range after a stop and before a start-up of an engine (10), and the crankshaft (13) is rotated in a reverse direction until the crank angle goes over a start-up intake range from the reverse rotation starting range and reaches a start-up ignition range at the start-up of the engine (10). When the crank angle is in the start-up intake range, a fuel-air mixture made of fuel and air that is injected by an injector is introduced into a combustion chamber (31 a) from an intake passage (22) through an intake port (21). Further, when the crank angle is in the start-up ignition range, the fuel-air mixture in the combustion chamber (31 a) is ignited by an ignition plug.

## Description

### BACKGROUND OF THE INVENTION

### Field of the Invention

The present invention relates to an engine system and a saddle-straddling type motor vehicle.

### Description of Related Art

In a saddle-straddling type motor vehicle such as a motorcycle, at the time of start-up operation of an engine, a larger torque is necessary for a crankshaft to first go over a crank angle corresponding to a compression top dead center. Therefore, there is a technique for rotating the crankshaft in a reverse direction in order to enhance startability of the engine.

In an engine start-up control device described in JP 2005-248921 A, the crankshaft is rotated in the reverse direction to a predetermined position by a starter/generator provided at the crankshaft after a stop of the engine. Thereafter, the crankshaft is rotated in a forward direction from that position at the time of a start-up of the engine.

### BRIEF SUMMARY OF THE INVENTION

An object of the present invention is to provide an engine system that can stably and quickly start an engine, and a saddle-straddling type motor vehicle including the engine system.

This object is achieved by an engine system according to claim 1, and by a saddle-straddling type motor vehicle according to claim 9.

The invention is based on the inventors' findings that in JP 2005-248921 A, even when the crankshaft is rotated in the forward direction after being rotated in the reverse direction in this manner, a sufficient torque may not be obtained, and the crankshaft may not be able to go over the crank angle corresponding to the compression top dead center.

(1) According to one aspect of the present invention, an engine system includes an engine unit that includes an engine and a rotation driver, and a controller that controls the engine unit, wherein the engine includes a cylinder, an intake passage that leads air to a combustion chamber of the cylinder, a fuel injection device arranged to inject fuel into the intake passage, an ignition device configured to ignite a fuel-air mixture in the combustion chamber, and a valve driver configured to respectively drive an intake valve for opening and closing an intake port and an exhaust valve for opening and closing an exhaust port, the rotation driver drives a rotation of a crankshaft of the engine in a forward direction or a reverse direction, the valve driver drives the intake valve such that the intake port is opened when a crank angle is in a predetermined start-up intake range, during the rotation of the crankshaft in the reverse direction, and the controller controls the rotation driver such that the crankshaft is rotated in the forward direction until the crank angle reaches a predetermined reverse rotation starting range, after a stop and before a start-up of the engine, and controls the rotation driver such that the crankshaft is rotated in the reverse direction until the crank angle goes over the start-up intake range from the reverse rotation starting range and reaches a predetermined start-up ignition range, controls the fuel injection device such that the fuel-air mixture is introduced into the combustion chamber from the intake passage through the intake port when the crank angle is in the start-up intake range, and controls the ignition device such that the fuel-air mixture in the combustion chamber is ignited when the crank angle is in the start-up ignition range, at a time of the start-up of the engine.

In this engine system, the crankshaft is rotated in the forward direction until the crank angle reaches the reverse rotation starting range after the stop and before the start-up of the engine, and the crankshaft is rotated in the reverse rotation until the crank angle goes over the start-up intake range and reaches an ignition range at the time of the start-up of the engine. The intake port is opened when the crank angle is in the start-up intake range, and the fuel-air mixture is introduced into the combustion chamber from the intake passage. In this case, even when there are variations in the crank angle at the time of the stop of the engine, the crank angle is adjusted in the reverse rotation starting range before the start-up of the engine, so that the crank angle reliably passes through the start-up intake range during the rotation of the crankshaft in the reverse direction. Thus, the fuel-air mixture can be appropriately introduced into the combustion chamber.

Thereafter, the fuel-air mixture in the combustion chamber is ignited when the crank angle is in the ignition range. Thus, an explosion occurs in the combustion chamber, and the crankshaft is driven to be rotated in the forward direction by the energy generated by an explosion. Thus, the crankshaft can easily go over the crank angle corresponding to the compression top dead center. Therefore, the engine can be stably and quickly started.

(2) The reverse rotation starting range may be in a range from a crank angle at which a piston is at an exhaust top dead center to a crank angle at which the piston is at a compression top dead center in the forward direction, the start-up intake range may be in a range from the crank angle at which the piston is at the exhaust top dead center to a crank angle at which the piston is at an expansion bottom dead center in the reverse direction, and the start-up ignition range may be in a range from the crank angle at which the piston is at the expansion bottom dead center to the crank angle at which the piston is at the compression top dead center in the reverse direction.

In this case, the crankshaft is rotated in the reverse direction from the reverse rotation starting range, so that the crank angle passes through the start-up intake range. When the crank angle is in the start-up intake range, the piston falls. Therefore, the fuel-air mixture is introduced into the combustion chamber from the intake passage. Further, the fuel-air mixture in the combustion chamber is compressed when the crank angle is in the ignition range. Thus, an explosion can be easily generated in the combustion chamber.

(3) The valve driver does not have to drive the intake valve when the crank angle is in the start-up intake range, during the rotation of the crankshaft in the forward direction.

During the rotation of the crankshaft in the forward rotation, the piston rises when the crank angle is in the start-up intake range. Therefore, the intake port is not opened when the crank angle is in the start-up intake range, so that the combusted gas is prevented from being led to the intake passage from the combustion chamber.

(4) The valve driver may drive the exhaust valve such that the exhaust port is opened when the crank angle is in a normal exhaust range, and may drive the intake valve such that the intake port is opened when the crank angle is in a normal intake range, during the rotation of the crankshaft in the forward direction, and the start-up intake range may be included in the normal exhaust range.

The moving directions of the piston are opposite to each other between the case during the rotation of the crankshaft in the forward direction and the case during the rotation of the crankshaft in the reverse direction. Therefore, a range of the crank angle in which the exhaust is to be performed during the rotation of the crankshaft in the forward direction corresponds to a range of the crank angle in which the intake is to be performed during the rotation of the crankshaft in the reverse direction. Therefore, the start-up intake range is included in the normal exhaust range, so that the exhaust during the rotation of the crankshaft in the forward direction and the intake during the rotation of the crankshaft in the reverse direction can be respectively appropriately performed.

(5) The reverse rotation starting range may be in a range from a crank angle at an end of the normal intake range to the crank angle at which the piston is at the compression top dead center in the forward direction.

In this case, during the rotation of the crankshaft in the reverse direction, the rotation speed of the crankshaft can be raised in a period in which the crank angle reaches the start-up intake range from the reverse rotation starting range. Thus, the fuel-air mixture can be efficiently introduced into the combustion chamber when the crank angle is in the start-up intake range.

(6) The controller may control the fuel injection device such that the fuel is injected into the intake passage before the intake port is opened or during a period in which the intake port is opened, during the rotation of the crankshaft in the reverse direction.

In this case, the fuel-air mixture is appropriately led to the combustion chamber when the crank angle is in the start-up intake range.

(7) The engine system may further include a crank angle detector that detects the crank angle, wherein the controller may adjust the crank angle in the reverse rotation starting range by rotating the crankshaft in the forward direction based on a detection result of the crank angle detector.

In this case, the crank angle can be efficiently accurately adjusted in the reverse rotation starting range.

(8) The controller may adjust the crank angle in the reverse rotation starting range by rotating the crankshaft in the forward rotation for a constant time period by a torque that is determined in advance such that the piston does not reach the compression top dead center.

In this case, even when the crank angle cannot be detected, a counterforce generated by the pressure in the combustion chamber and the driving force of the piston are antagonized, so that the crank angle can be adjusted in the reverse rotation starting range.

(9) According to another aspect of the present invention, a saddle-straddling type motor vehicle includes a main body that has a drive wheel, and the engine system according to one aspect of the above-mentioned present invention that generates motive power for rotating the drive wheel.

In this saddle-straddling type motor vehicle, the drive wheel is rotated by the motive power generated by the engine system. Thus, the main body is moved. In this case, because the engine system according to one aspect of the above-mentioned present invention is used, the engine can be stably and quickly started. Thus, a driving feeling of the saddle-straddling type motor vehicle is improved.

### BRIEF DESCRIPTION OF THE SEVERAL VIEWS OF THE DRAWING

Fig. 1 is a schematic side view showing the general configuration of a motorcycle according to one embodiment of the present invention;
Fig. 2 is a schematic diagram for explaining the configuration of an engine system;
Fig. 3 is a diagram for explaining the operation of an engine unit;
Fig. 4 is a diagram for explaining the operation of the engine unit;
Fig. 5 is a flow chart of a first example of an engine start-up process;
Fig. 6 is a flow chart of the first example of the engine start-up process;
Fig. 7 is a flow chart of the first example of the engine start-up process;
Fig. 8 is a flow chart of a second example of the engine start-up process;
Fig. 9 is a schematic side view for explaining a specific example of a valve driver;
Fig. 10 is a cross sectional view of the valve driver and its peripheral portions;
Fig. 11 is an external perspective view of the valve driver;
Fig. 12 is a cross sectional view of the valve driver;
Fig. 13 is a partially exploded perspective view of the valve driver;
Fig. 14 is a partially exploded perspective view of the valve driver;
Fig. 15 is an external perspective view of a switching mechanism;
Fig. 16 is a cross sectional view of the switching mechanism;
Fig. 17 is an exploded perspective view of a pressure mechanism;
Figs. 18(a) and 18(b) are diagrams for explaining a main-intake cam and a sub-intake cam;
Figs. 19(a) to 19(d) are diagrams for explaining the function of the main-intake cam and the sub-intake cam during a forward rotation of a crankshaft;
Figs. 20(a) to 20(d) are diagrams for explaining the function of the main-intake cam and the sub-intake cam during a reverse rotation of the crankshaft;
Figs. 21 (a) and 21(b) are diagrams showing lift amounts of an intake valve;
Figs. 22(a) and 22(b) are cross sectional views for explaining an exhaust cam;
Figs. 23(a) to 23(d) are diagrams for explaining the function of the exhaust cam during the forward rotation of the crankshaft;
Figs. 24(a) to 24(d) are diagrams for explaining the function of the exhaust cam during the reverse rotation of the crankshaft;
Figs. 25(a) and 25(b) are diagrams for showing the operation of the exhaust cam right after the rotation direction of the crankshaft is switched from a reverse direction to a forward direction;
Figs. 26(a) and 26(b) are diagrams for explaining the operation of the switching mechanism; and
Figs. 27(a) and 27(b) are diagrams for explaining another example of the switching mechanism.

### DESCRIPTION OF THE PREFERRED EMBODIMENTS

A motorcycle will be described below with reference to drawings as one example of a saddle-straddling type motor vehicle according to embodiments of the present invention.

### (1) Motorcycle

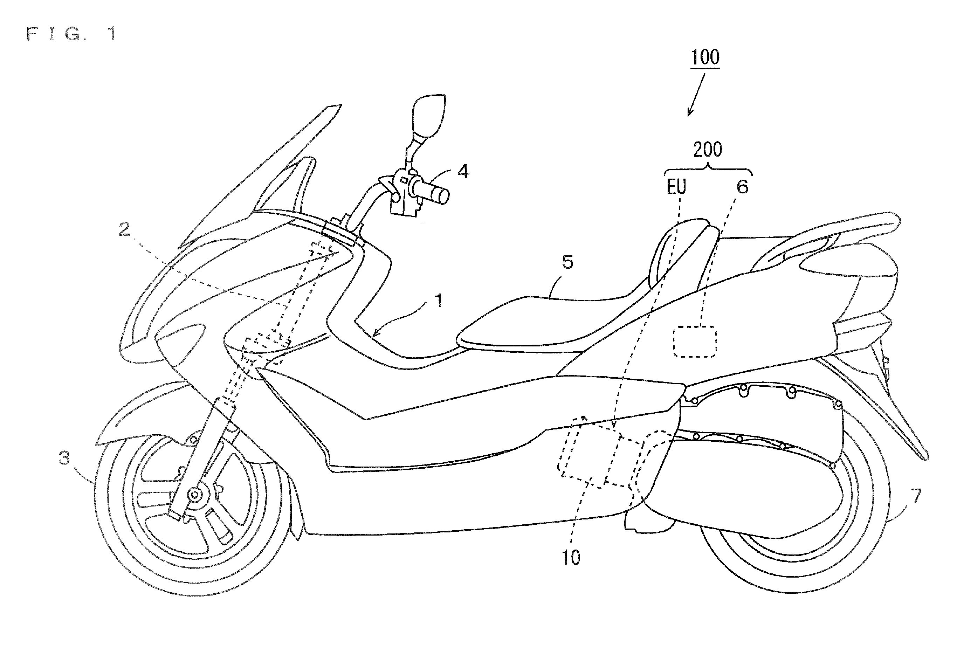

Fig. 1 is a schematic side view showing the schematic configuration of the motorcycle according to one embodiment of the present invention. In the motorcycle 100 of Fig. 1, a front fork 2 is provided at the front of a vehicle body 1 to be swingable to the right and the left. A handle 4 is attached to the upper end of the front fork 2, and a front wheel 3 is attached to the lower end of the front fork 2 to be rotatable.

A seat 5 is provided at substantially the center of the upper portion of the vehicle body 1. An ECU (Engine Control Unit) 6 is arranged at the lower portion behind the seat 5, and an engine unit EU is provided below the seat 5. The engine unit EU includes a single-cylinder engine 10, for example. An engine system 200 is constituted by the ECU 6 and the engine unit EU. A rear wheel 7 is attached to the lower portion of the rear end of the vehicle body 1 to be rotatable. The rotation of the rear wheel 7 is driven by the motive power generated by the engine 10.

### (2) Engine System

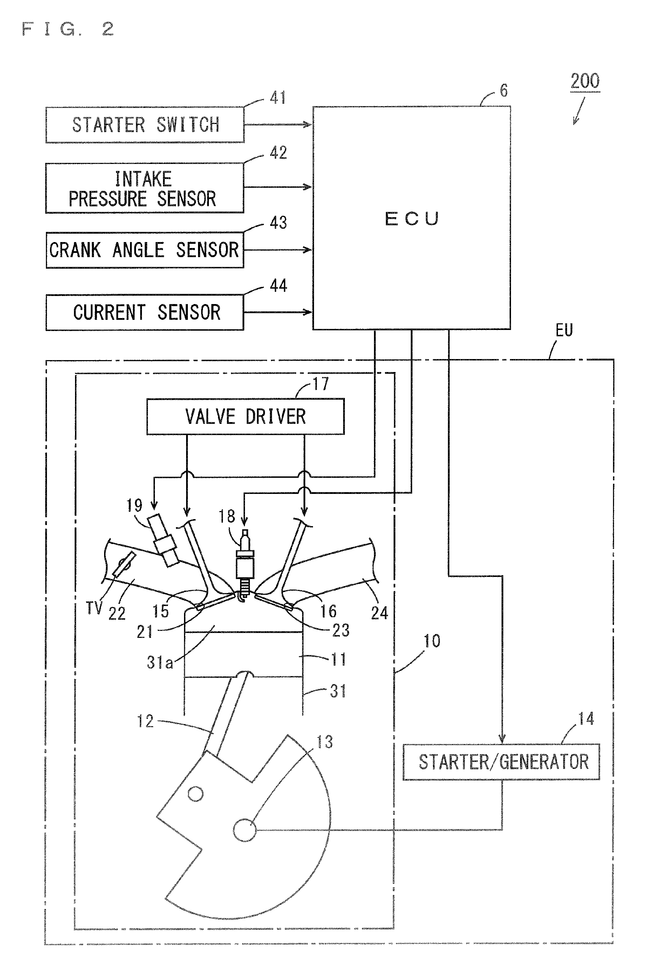

Fig. 2 is a schematic diagram for explaining the configuration of the engine system 200. As shown in Fig. 2, the engine unit EU includes the engine 10 and a starter/generator 14. The engine 10 includes a piston 11, a connecting rod 12, a crankshaft 13, an intake valve 15, an exhaust valve 16, a valve driver 17, an ignition plug 18 and an injector 19.

The piston 11 is provided to be reciprocatable in a cylinder 31 and connected to the crankshaft 13 via the connecting rod 12. The reciprocating motion of the piston 11 is transformed into the rotational motion of the crankshaft 13. The starter/generator 14 is provided at the crankshaft 13. The starter/generator 14 is a generator having the function of a starter motor, drives the rotation of the crankshaft 13 in forward and reverse directions and generates electric power by the rotation of the crankshaft 13. In the following description, the forward direction and the reverse direction mean rotation directions of the crankshaft 13, respectively. The starter/generator 14 directly transmits a torque to the crankshaft 13 without a reduction gear therebetween. A one-way clutch (not shown) is provided between the crankshaft 13 and the rear wheel 7. The rotation of the crankshaft 13 in the forward direction (hereinafter referred to as a forward rotation) is transmitted to the rear wheel 7 through the one-way clutch, and the rotation of the crankshaft 13 in the reverse direction (hereinafter referred to as a reverse rotation) is not transmitted to the rear wheel 7.

A combustion chamber 31a is formed on the piston 11. The combustion chamber 31a communicates with an intake passage 22 through an intake port 21 and communicates with an exhaust passage 24 through an exhaust port 23. An intake valve 15 is provided to open and close the intake port 21, and an exhaust valve 16 is provided to open and close the exhaust port 23. The intake valve 15 and the exhaust valve 16 are driven by the valve driver 17. A throttle valve TV for adjusting a flow rate of air from the outside is provided at the intake passage 22. The ignition plug 18 is configured to ignite a fuel-air mixture in the combustion chamber 31a. The injector 19 is configured to inject fuel into the intake passage 22.

The ECU 6 includes a CPU (Central Processing Unit) and a memory, for example. A microcomputer may be used instead of the CPU and the memory. A starter switch 41, an intake pressure sensor 42, a crank angle sensor 43 and a current sensor 44 are electrically connected to the ECU 6. The starter switch 41 is provided at the handle 4 of Fig. 1, for example, and is operated by a rider. The intake pressure sensor 42 detects pressure in the intake passage 22. The crank angle sensor 43 detects a rotation angle of the crankshaft 13. The current sensor 44 detects a current that flows in the starter/generator 14 (hereinafter referred to as a motor current).

The operation of the starter switch 41 is supplied to the ECU 6 as an operation signal, and the detection results by the intake pressure sensor 42, the crank angle sensor 43 and the current sensor 44 are supplied to the ECU 6 as detection signals. The ECU 6 controls the starter/generator 14, the ignition plug 18 and the injector 19 based on the supplied operation signal and the detection signals.

### (3) Operation of Engine

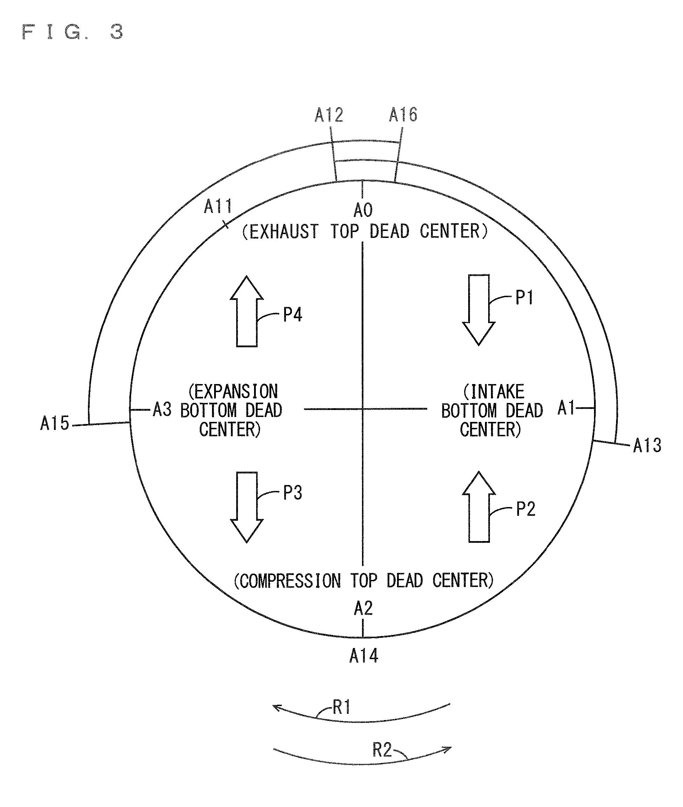

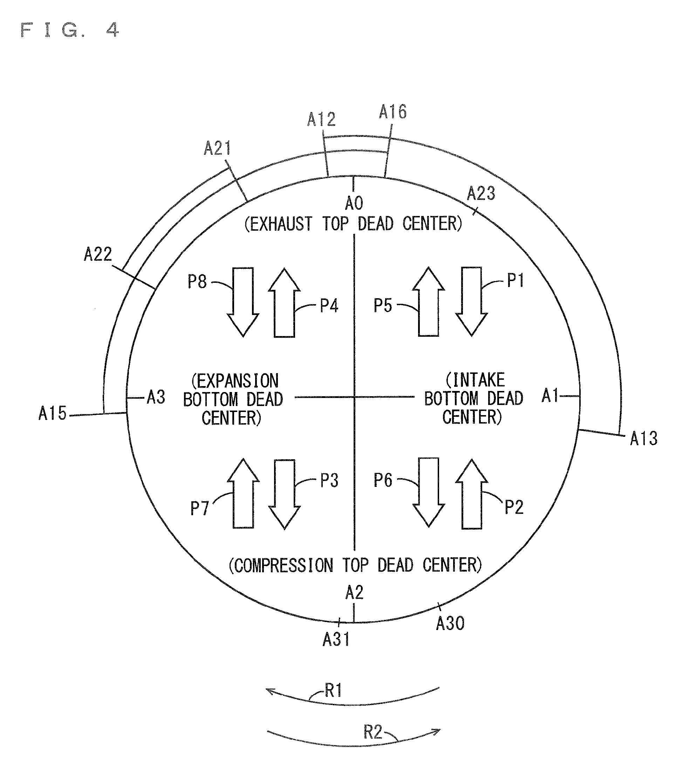

Figs. 3 and 4 are diagrams for explaining the operation of the engine unit EU. Fig. 3 shows the operation of the engine unit EU during normal running of the engine 10, and Fig. 4 shows the operation of the engine unit EU during a period before and after the start-up of the engine 10.

The start-up of the engine 10 is performed when the starter switch 41 of Fig. 2 is turned on, for example. Further, the ECU 6 may automatically stop or start the engine 10 based on the operation for stopping or starting the motorcycle 100 by the rider. For example, the engine 10 is automatically stopped when a predetermined idle stop condition is satisfied, and the engine 10 is automatically started when a predetermined idle stop release condition is satisfied.

The idle stop condition includes a condition that relates to at least one of a degree of opening of the throttle valve TV (a throttle opening), a vehicle speed and a rotation speed of the engine 10, for example. The idle stop release condition is that the throttle opening becomes larger than 0 due to the operation of an accelerator grip, for example. Hereinafter, a state in which the engine 10 is automatically stopped because the idle stop condition is satisfied is referred to as an idle stop state. Further, the normal running is a state in which the engine 10 stably operates after the start-up of the engine 10.

In the following description, a rotation position of the crankshaft 13 is referred to as a crank angle. Further, a top dead center through which the piston 11 passes at the time of switching from a compression stroke to an expansion stroke is referred to as a compression top dead center, and a top dead center through which the piston 11 passes at the time of switching from an exhaust stroke to an intake stroke is referred to as an exhaust top dead center. A bottom dead center through which the piston 11 passes at the time of switching from the intake stroke to the compression stroke is referred to as an intake bottom dead center, and a bottom dead center through which the piston 11 passes at the time of switching from the expansion stroke to the exhaust stroke is referred to as an expansion bottom dead center.

In Figs. 3 and 4, a rotation angle in a range of two rotations (720 degrees) of the crankshaft 13 is indicated by one circle. The two rotations of the crankshaft 13 is equivalent to one cycle of the engine 10. The one cycle of the engine 10 includes the intake stroke, the compression stroke, the expansion stroke and the exhaust stroke.

The crank angle sensor 43 of Fig. 2 detects the rotation angle in a range of one rotation (360 degrees) of the crankshaft 13. The ECU 6 determines which one of the two rotations of the crankshaft 13 equivalent to the one cycle of the engine 10 the crank angle detected by the crank angle sensor 43 corresponds to based on the pressure in the intake passage 22 detected by the intake pressure sensor 42. Thus, the ECU 6 can obtain the rotation angle in the range of the two rotations (720 degrees) of the crankshaft 13.

In Figs. 3 and 4, an angle A0 is the crank angle when the piston 11 (Fig. 2) is positioned at the exhaust top dead center, an angle A2 is the crank angle when the piston 11 is positioned at the compression top dead center, an angle A1 is the crank angle when the piston 11 is positioned at the intake bottom dead center and an angle A3 is the crank angle when the piston 11 is positioned at the expansion bottom dead center. The arrow R1 indicates a direction in which the crank angle changes during the forward rotation of the crankshaft 13, and the arrow R2 indicates a direction in which the crank angle changes during the reverse rotation of the crankshaft 13. The arrows P1 to P4 indicate moving directions of the piston 11 during the forward rotation of the crankshaft 13, and the arrows P5 to P8 indicate the moving directions of the piston 11 during the reverse rotation of the crankshaft 13.

### (3-1) During Normal Running

The operation of the engine unit EU during the normal running of the engine 10 will be described with reference to Fig. 3. During the normal running, the crankshaft 13 (Fig. 2) is rotated in the forward direction. Thus, the crank angle changes in the direction of the arrow R1. In this case, as indicated by the arrows P1 to P4, the piston 11 (Fig. 2) falls in a range from the angle A0 to the angle A1, the piston 11 rises in a range from the angle A1 to the angle A2, the piston 11 falls in a range from the angle A2 to the angle A3 and the piston 11 rises in a range from the angle A3 to the angle A0.

At an angle A11, the fuel is injected into the intake passage 22 (Fig. 2) by the injector 19 (Fig. 2). In the forward direction, the angle A11 is positioned at a further advanced angle than the angle A0. Then, in a range from an angle A12 to an angle A13, the intake port 21 (Fig. 2) is opened by the intake valve 15 (Fig. 2). In the forward direction, the angle A12 is positioned at a further retarded angle than the angle A11 and a further advanced angle than the angle A0, and the angle A13 is positioned at a further retarded angle than the angle A1. The range from the angle A12 to the angle A13 is an example of a normal intake range. Thus, the fuel-air mixture including air and the fuel is introduced into the combustion chamber 31a (Fig. 2) through the intake port 21.

Next, at an angle A14, the fuel-air mixture in the combustion chamber 31a (Fig. 2) is ignited by the ignition plug 18 (Fig. 2). The angle A14 substantially coincides with the angle A2. This causes an explosion in the combustion chamber 31 a. Energy generated by the explosion is turned into the driving force for the piston 11. Thereafter, in a range from an angle A15 to an angle A16, the exhaust port 23 (Fig. 2) is opened by the exhaust valve 16 (Fig. 2). In the forward direction, the angle A15 is positioned at a further advanced angle than the angle A3, and the angle A16 is positioned at a further retarded angle than the angle A0. The range from the angle A15 to the A16 is an example of a normal exhaust range. This causes the combusted gas to be exhausted from the combustion chamber 31 a through the exhaust port 23.

### (3-2) Period Before and After Start-Up

The operation of the engine unit EU in the period before and after the start-up of the engine 10 will be described with reference to Fig. 4. In Fig. 4, the crankshaft 13 (Fig. 2) is first rotated in the forward direction after the stop of the engine 10 and before the start-up of the engine 10, whereby the crank angle is adjusted to an angle A30. The angle A30 is an example of a reverse rotation starting range. The angle A30 is in a range from the angle A0 to the angle A2, for example, and is preferably in a range from the angle A13 to the angle A2, in the forward direction. In the present example, the angle A30 is in the range from the angle A13 to the angle A2.

After the stop of the engine 10 means after a main switch (not shown) is turned off or after the idle stop condition is satisfied, for example, and also means after the injection of the fuel by the injector 19 and the ignition by the ignition plug 18 are stopped, and the rotation of the crankshaft 13 due to inertia is also stopped. Before the start-up of the engine 10 is means before the starter switch 41 is turned on, or before the idle stop release condition is satisfied, for example.

Subsequently, at the time of the start-up of the engine 10, the crankshaft 13 is rotated in the reverse direction from the angle A30. During the reverse rotation of the crankshaft 13, the crank angle changes in the direction of the arrow R2. In this case, as indicated by the arrows P5 to P8, the piston 11 falls in a range from the angle A2 to the angle A1, the piston 11 rises in a range from the angle A1 to the angle A0, the piston 11 falls in a range from the angle A0 to the angle A3 and the piston 11 rises in a range from the angle A3 to the angle A2. The moving direction of the piston 11 during the reverse rotation of the crankshaft 13 is opposite to the moving direction of the piston 11 during the forward rotation of the crankshaft 13.

While the intake port 21 is opened in a range from the angle A13 to the angle A12 and the exhaust port 23 is opened in a range from the angle A16 to the angle A15 even during the reverse rotation of the crankshaft 13 similarly to a case during the forward rotation in the present example, the present invention is not limited to this. During the reverse rotation of the crankshaft 13, the intake port 21 does not have to be opened in the range from the angle A13 to the angle A12, and further, the exhaust port 23 does not have to be opened in the range from the angle A16 to the angle A15.

The fuel is injected into the intake passage 22 (Fig. 2) by the injector 19 (Fig. 2) at an angle A23. In the reverse direction, the angle A23 is positioned at a further advanced angle than the angle A0. Further, the intake port 21 (Fig. 2) is opened by the intake valve 15 (Fig. 2) in the range from the angle A13 to the angle A12 and a range from an angle A21 to an angle A22. The range from the angle A21 to the angle A22 is an example of a start-up intake range. The angles A21, A22 are preferably in the range from the angle A0 to the angle A3 in the reverse direction. In the present example, the angles A21, A22 are positioned at further retarded angles than the angle A0 in the reverse direction. In this case, because the piston 11 rises in the range from the angle A1 to the angle A0, air and the fuel are hardly introduced into the combustion chamber 31 a in the range from the angle A13 to the angle A12. Thereafter, because the piston 11 falls in the range from the angle A0 to the angle A3, the fuel-air mixture including air and the fuel is introduced into the combustion chamber 31a through the intake port 21 in the range from the angle A21 to the A22.

Subsequently, at an angle A31, the rotation direction of the crankshaft 13 is switched from the reverse direction to the forward direction. The angle A31 is an example of a start-up ignition range, and is preferably in the range from the angle A3 to the angle A2 in the reverse direction. In the present example, the angle A31 is positioned at a slightly further advanced angle than the angle A2 in the reverse direction. Thus, the crank angle changes in the direction of the arrow R1. Further, at the angle A31, the fuel-air mixture in the combustion chamber 31 a is ignited by the ignition plug 18 (Fig. 2). Thus, an explosion occurs in the combustion chamber 31 a, and the crankshaft 13 is driven.

In the present embodiment, the fuel-air mixture in the combustion chamber 31a is ignited by the ignition plug 18 after the reverse rotation of the crankshaft 13 is stopped. Thus, the crankshaft 13 can be reliably driven in the forward direction. If it is possible to drive the crankshaft 13 in the forward direction by adjusting an ignition time and the like, the fuel-air mixture in the combustion chamber 31a a may be ignited by the ignition plug 18 before the reverse rotation of the crankshaft 13 is stopped.

Thereafter, similar operation to Fig. 3 is performed. Specifically, the fuel is injected into the intake passage 22 (Fig. 2) at the angle A11 of Fig. 3, and the fuel-air mixture is introduced into the combustion chamber 31a in the range from the angle A12 to the angle A13. Subsequently, the fuel-air mixture in the combustion chamber 31a is ignited by the ignition plug 18 (Fig. 2) at the angle A14, and the combusted gas is exhausted from the combustion chamber 31a through the exhaust port 23 in the range from the angle A15 to the angle A16. Thereafter, the engine 10 proceeds to the normal running.

In this manner, in the present embodiment, the fuel-air mixture is led to the combustion chamber 31a while the crankshaft 13 is rotated in the reverse direction by the starter/generator 14 and thereafter, the fuel-air mixture in the combustion chamber 31a is ignited with the piston 11 being close to the compression top dead center, at the time of the start-up of the engine 10. Thus, the piston 11 is driven such that the crankshaft 13 is rotated in the forward direction, whereby a sufficient torque in the forward direction can be obtained. As a result, the piston 11 can easily go over a first compression top dead center.

The exhaust port 23 may be opened by the exhaust valve 16 in the range from the angle A15 to the angle A16, after the rotation direction of the crankshaft 13 is switched from the reverse direction to the forward direction at the angle A31, and before the intake port 21 is opened by the intake valve 15 in a range from the angle A12 to the angle A13 of Fig. 3. In this case, a gas combusted by the ignition at the angle A31 is exhausted from the combustion chamber 31 a before the intake is performed in the range from the angle A12 to the angle A13.

### (3-3) Adjustment of Crank Angle

At the time of the stop of the engine 10, the rotation of the crankshaft 13 may be stopped with the crank angle being in a range from the angle A0 to the angle A31 due to the following reason.

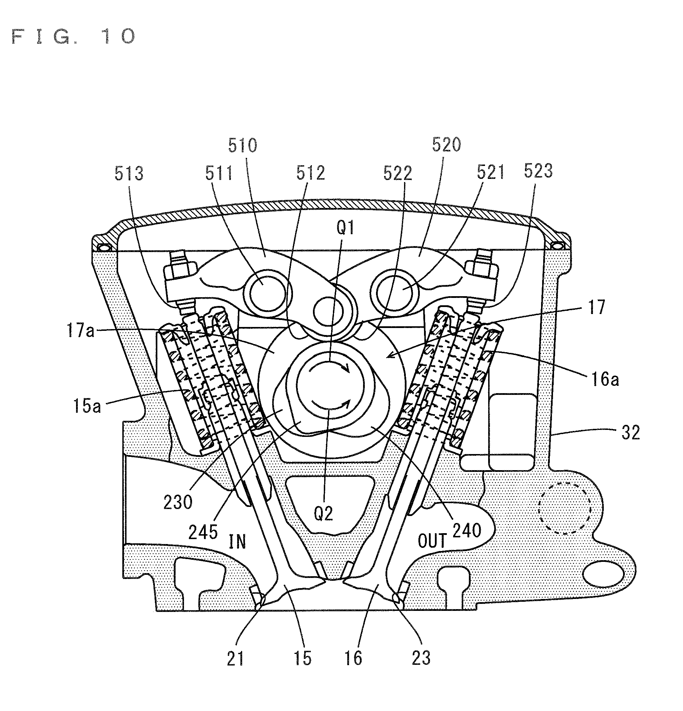

When the valve driver 17 of Fig. 2 is made of a camshaft, the valve driver 17 is rotated in conjunction with the rotation of the crankshaft 13. When the valve driver 17 lifts the intake valve 15, the energizing force of the below-mentioned valve spring 15a (Fig. 10) is applied from the intake valve 15 to the valve driver 17 as a counterforce. Similarly, when the valve driver 17 lifts the exhaust valve 16, the energizing force of the below-mentioned valve spring 16a (Fig. 10) is applied from the exhaust valve 16 to the valve driver 17 as a counterforce.

At the time of the stop of the engine 10, because the combustion of the fuel-air mixture is not performed in the combustion chamber 31 a, the rotational force of the crankshaft 13 and the valve driver 17 gradually decreases. In that case, the rotation of the valve driver 17 may be stopped due to the counterforce from the intake valve 15 or the exhaust valve 16, and the rotation of the crankshaft 13 may be stopped accordingly.

When the crank angle is in the vicinity of the angle A15, the counterforce from the exhaust valve 16 is applied to the valve driver 17. Thus, when the crank angle is in the vicinity of the angle A15, the rotation of the crankshaft 13 is likely to be stopped. Further, when the crank angle is in the vicinity of the angle A0, the counterforce from the intake valve 15 and the counterforce from the exhaust valve 16 are respectively applied to the valve driver 17. Thus, the rotation of the crankshaft 13 is likely to be stopped even when the crank angle is in the vicinity of the angle A0.

As described above, the crankshaft 13 is rotated in the reverse direction at the time of the start-up of the engine 10. At that time, when the reverse rotation of the crankshaft 13 is started with the crank angle being in the range from the angle A0 to the angle A31 in the reverse direction, the start-up of the engine 10 cannot be appropriately performed.

Specifically, when the reverse rotation of the crankshaft 13 is started with the crank angle being in a range from the angle A15 to the angle A31, the crank angle reaches the angle A31 without passing through a range from the angle A21 to the angle A22. In this case, the fuel-air mixture is not introduced into the combustion chamber 31a. Therefore, an explosion does not occur in the combustion chamber 31 a at the angle A31, so that the driving force for rotating the crankshaft 13 in the forward direction is not obtained.

Further, the pressure in the combustion chamber 31a increases as the crank angle approaches the angle A31. Therefore, when the crankshaft 13 does not have more than a certain rotation speed, the crank angle is unlikely to reach the angle A31. When the reverse rotation of the crankshaft 13 is started from the crank angle that is closer to the angle A31, the rotation speed of the crankshaft 13 may not increase, and the crank angle may not reach the angle A31.

When the reverse rotation of the crankshaft 13 is started with the crank angle being in a range from the angle A0 to the angle A21, the crank angle changes in the range from the angle A21 to the angle A22 with the rotation speed of the crankshaft 13 being low. In this case, the fuel-air mixture is unlikely to be led into the combustion chamber 31 a in the range from the angle A21 to the angle A22. Therefore, at the angle A31, even when the fuel-air mixture in the combustion chamber 31a is ignited, sufficient driving force for rotating the crankshaft 13 in the forward direction is not obtained. Further, similarly to the above, the rotation speed of the crankshaft 13 may not sufficiently increase, so that the crank angle may not reach the angle A31.

In the present embodiment, the crankshaft 13 is rotated in the forward direction such that the crank angle reaches the angle A30 before the crankshaft 13 is rotated in the reverse direction. The reverse rotation of the crankshaft 13 is started from the angle A30, so that the rotation speed of the crankshaft 13 sufficiently increases at a time point at which the crank angle reaches the angle A21. Therefore, the fuel-air mixture is sufficiently introduced into the combustion chamber 31a in the range from the angle A21 to the angle A22. Further, because the rotation speed of the crankshaft 13 sufficiently increases, the crank angle reliably reaches the angle A31. Therefore, at the angle A31, an explosion of the fuel-air mixture can be appropriately generated in the combustion chamber 31a. Thus, the sufficient driving force for rotating the crankshaft 13 in the forward direction is obtained. As a result, the start-up of the engine 10 can be appropriately performed.

### (4) Engine Start-Up Process

### (4-1) First Example

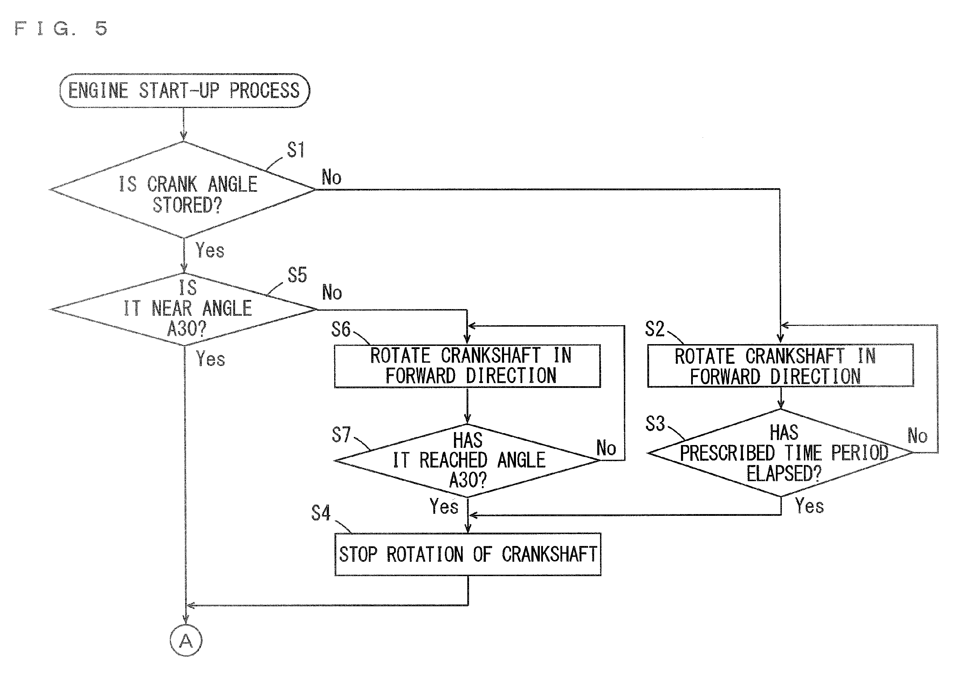

During the period before and after the start-up of the engine 10, the ECU 6 performs the engine start-up process based on the control program stored in advance in the memory. Figs. 5 to 7 are flowcharts of the first example of the engine start-up process. The engine start-up process is performed in a case in which the main switch (not shown) is turned on, or in a case in which the engine 10 is switched to an idle stop state, for example.

As shown in Fig. 5, the ECU 6 first determines whether or not the current crank angle is stored in the memory (step S1). The current crank angle is previously stored in the memory at the last stop of the engine 10, for example. The current crank angle is not stored right after the main switch is turned on, and the current crank angle is stored in the idle stop state, for example.

When the current crank angle is not stored, the ECU 6 controls the starter/generator 14 such that the crankshaft 13 is rotated in the forward direction (step S2). In this case, a torque of the starter/generator 14 is adjusted based on a detection signal from the current sensor 44 (Fig. 2) such that the piston 11 does not go over the compression top dead center (the angle A2 of Figs. 3 and 4).

Next, the ECU 6 determines whether or not a specified time period has elapsed since the rotation of the crankshaft 13 is started in step S2 (step S3). In a case in which the specified time period has not elapsed, the ECU 6 controls the starter/generator 14 such that the rotation of the crankshaft 13 in the forward direction continues. In a case in which the specified time period has elapsed, the ECU 6 controls the starter/generator 14 such that the rotation of the crankshaft 13 is stopped (step S4). Thus, the crank angle is adjusted to be near the angle A30 of Fig. 4.

Note that, in step S2, the crank angle may be detected when the crankshaft 13 is rotated in the forward direction, and the crank angle may be adjusted to the angle A30 of Fig. 4 based on its detection value.

On the other hand, in step S1, when the current crank angle is stored, the ECU 6 determines whether or not the current crank angle is near the angle A30 (Fig. 4) (step S5). For example, when a difference between the current crank angle and the angle A30 is in a predetermined allowable range, the current crank angle is determined to be near the angle A30. On the other hand, when the difference between the current crank angle and the angle A30 is out of the allowable range, the current crank angle is determined not to be near the angle A30.

When the current crank angle is not near the angle A30, the ECU 6 controls the starter/generator 14 such that the crankshaft 13 is rotated in the forward direction (step S6). In this case, the torque of the starter/generator 14 is adjusted based on the detection signal from a current sensor 44 (Fig. 2) such that the piston 11 does not go over the compression top dead center (the angle A2 of Figs. 3 and 4).

Next, the ECU 6 determines whether or not the current crank angle has reached the angle A30 based on the detection results of the intake pressure sensor 42 and the crank angle sensor 43 (step S7). In a case in which the current crank angle has not reached the angle A30, the ECU 6 controls the starter/generator 14 such that the rotation of the crankshaft 13 in the forward direction is continued. When the current crank angle has reached the angle A30, the ECU 6 controls the starter/generator 14 such that the rotation of the crankshaft 13 is stopped (step S4). Thus, the crank angle is adjusted to the angle A30 of Fig. 4.

In the processes of steps S6, S7, the adjustment of the crank angle is accurately performed and the electric power consumption by the starter/generator 14 is inhibited as compared to the processes of the above-mentioned steps S2, S3.

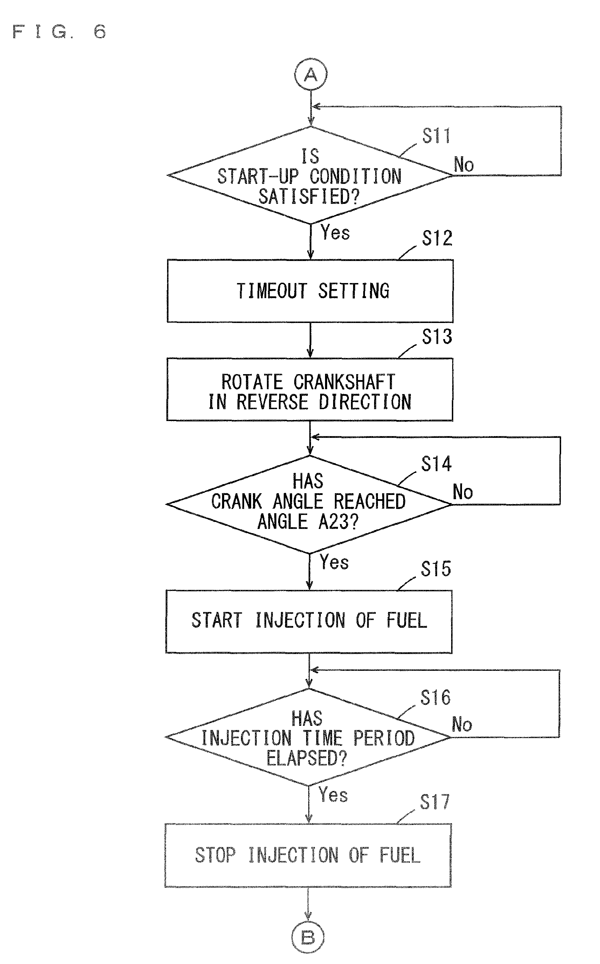

After the crank angle is adjusted to be near the angle A30 by the forward rotation of the crankshaft 13, the process of step S11 of Fig. 6 is performed. Further, in step S5, when the current crank angle is near the angle A30, the process of step S11 of Fig. 6 is performed as it is.

As shown in Fig. 6, the ECU 6 determines whether or not the predetermined start-up condition of the engine 10 is satisfied (step S11). For example, the start-up condition of the engine 10 is that the starter switch 41 (Fig. 2) is turned on, or that the idle stop release condition is satisfied. Another condition, for example, when a brake switch (not shown) is turned off, an accelerator grip (not shown) is operated, or a voltage of a battery (not shown) is reduced, may be set as the start-up condition of the engine 10.

When the start-up condition of the engine 10 is satisfied, the ECU 6 performs a timeout setting for the engine start-up process (step S12). Specifically, an elapsed time period is measured from that time point. When the elapsed time period reaches a predetermined end time period, the engine start-up process is forcibly terminated (step S28 described below).

Next, the ECU 6 controls the starter/generator 14 such that the crankshaft 13 is rotated in the reverse direction (step S13). Next, the ECU 6 determines whether or not the current crank angle has reached the angle A23 of Fig. 4 based on the detection signals from the intake pressure sensor 42 (Fig. 2) and the crank angle sensor 43 (Fig. 2) (step S14). The ECU 6 repeats the process of step S14 until the current crank angle reaches the angle A23. When the current crank angle reaches the angle A23, the ECU 6 controls the injector 19 such that the injection of the fuel into the intake passage 22 (Fig. 2) is started (step S15). In this case, a pulse signal may be supplied from the crank angle sensor 43 to the ECU 6 when the crank angle reaches the angle A23, and the ECU 6 may control the injector 19 such that the fuel is injected in response to the pulse signal.

Next, the ECU 6 determines whether or not a predetermined injection time period has elapsed since the injection of the fuel is started in step S15 (step S16). The ECU 6 controls the injector 19 such that the injection of the fuel is continued until the predetermined injection time period elapses. When the predetermined injection time period elapses, the ECU 6 controls the injector 19 such that the injection of the fuel is stopped (step S17).

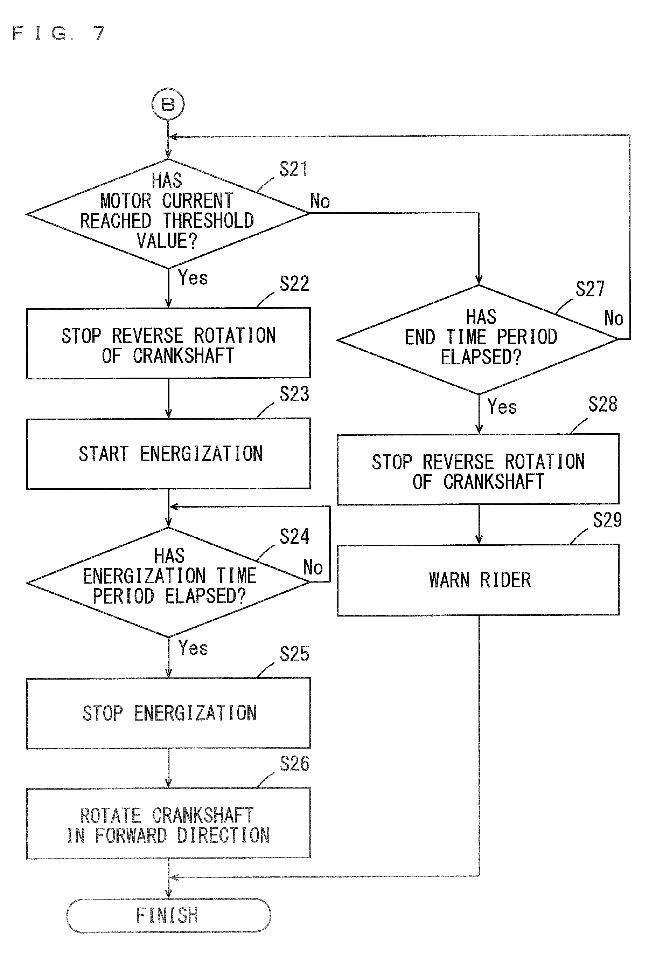

Then, as shown in Fig. 7, the ECU 6 determines whether or not the motor current has reached a predetermined threshold value based on the detection signal from the current sensor 44 (step S21). In this case, the closer the crank angle is to the angle A2 of Fig. 4, the larger the motor current is. In the present example, when the crank angle reaches the angle A31 of Fig. 4, the motor current reaches the threshold value.

When the current flowing in the starter/generator 14 reaches a predetermined threshold value, the ECU 6 controls the starter/generator 14 such that the rotation of the crankshaft 13 in the reverse direction is stopped (step S22), and the energization to the ignition plug 18 is started (step S23). Then, the ECU 6 determines whether or not a predetermined energization time period has elapsed since the energization is started in step S23 (step S24). The ECU 6 continues the energization to the ignition plug 18 until the predetermined energization time period elapses. When the predetermined energization time period elapses, the ECU 6 stops the energization to the ignition plug 18 (step S25). Thus, the fuel-air mixture in the combustion chamber 31a is ignited. Further, the ECU 6 controls the starter/generator 14 such that the crankshaft 13 is rotated in the forward direction (step S26). Thus, the ECU 6 terminates the engine start-up process. Thereafter, the ECU 6 performs the control operation corresponding to the operation of the normal running of Fig. 3. The driving of the crankshaft 13 by the starter/generator 14 is stopped after a certain time period has elapsed since the process of step S26, for example.

In step S21, in a case in which the motor current has not reached the threshold value, the ECU 6 determines whether or not the predetermined end time period has elapsed since the timeout setting of step S12 of Fig. 6 (step S27). The predetermined end time period may elapse since the timeout setting with the current flowing in the starter/generator 14 not reaching the threshold value due to trouble with the engine unit EU. The trouble with the engine unit EU includes an operational problem with the starter/generator 14, an operational problem of the valve driver 17 or the like. In a case in which the end time period has not elapsed, the ECU 6 returns to the process of step S21. When the end time period has elapsed, the ECU 6 controls the starter/generator 14 such that the rotation of the crankshaft 13 in the reverse direction is stopped (step S28), and warns the rider that the trouble with the engine unit EU has occurred (step S29). Specifically, a warning lamp (not shown) is lit, for example. Thus, the ECU 6 terminates the engine start-up process.

### (4-2) Second Example

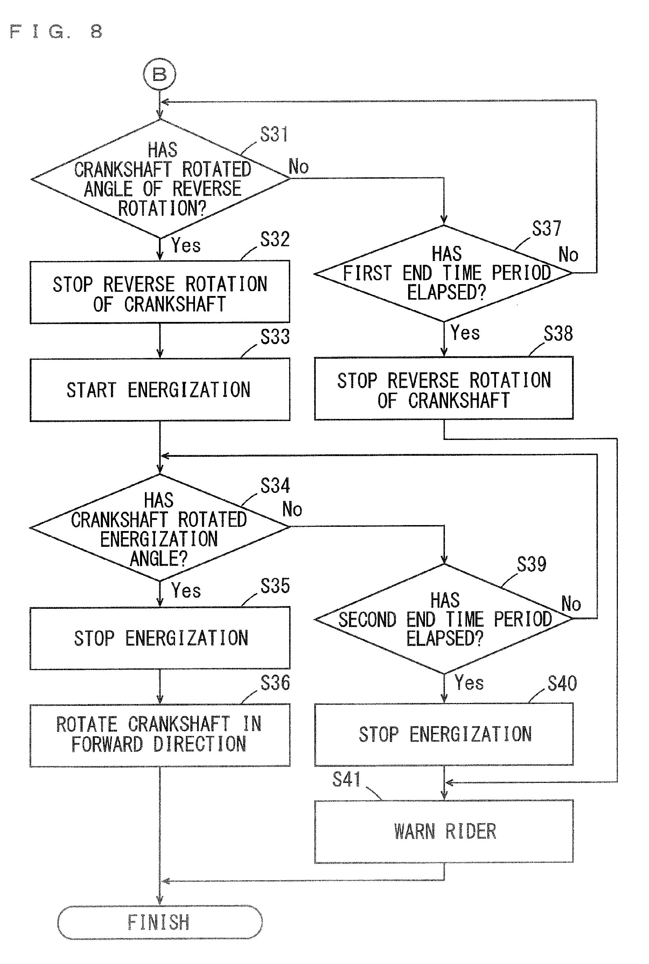

Fig. 8 is a flowchart of the second example of the engine start-up process. The ECU 6 may perform the processes of steps S31 to S41 of Fig. 8 instead of the processes of steps S21 to S29 of Fig. 7.

In the example of Fig. 8, the ECU 6 determines whether or not the crankshaft 13 has been rotated a predetermined angle of reverse rotation after the reverse rotation of the crankshaft 13 is started in step S13 of Fig. 6 based on the detection signal from the crank angle sensor 43 (Fig. 2) (step S31). The angle of reverse rotation is equivalent to the angle from the angle A30 to the angle A31 of Fig. 4. When a prescribed number of pulses corresponding to the angle of reverse rotation are supplied from the crank angle sensor 43 as the detection signals after the reverse rotation of the crankshaft 13 is started, for example, the ECU 6 determines that the crankshaft 13 has been rotated the angle of reverse rotation.

When the crankshaft 13 has been rotated the angle of reverse rotation, the ECU 6 controls the starter/generator 14 such that the rotation of the crankshaft 13 in the reverse direction is stopped (step S32) and starts the energization to the ignition plug 18 (step S33).

Next, the ECU 6 determines whether or not the crankshaft 13 has been rotated a predetermined energization angle after the energization is started in step S33 (step S34). The energization angle is equivalent to the angle by which the crankshaft 13 is rotated in the energization time period in step S24 of Fig. 7. For example, when a prescribed number of pulses corresponding to the energization angle are supplied from the crank angle sensor 43 as the detection signals after the energization is started, the ECU 6 determines that the crankshaft 13 has been rotated the energization angle.

When the crankshaft 13 has been rotated the energization angle, the ECU 6 stops the energization to the ignition plug 18 (step S35), controls the starter/generator 14 such that the crankshaft 13 is rotated in the forward direction (step S36) and terminates the engine start-up process.

On the other hand, in step S31, in a case in which the crankshaft 13 has not been rotated the angle of reverse rotation, the ECU 6 determines whether or not a predetermined first end time period has elapsed since the timeout setting in step S7 (step S37). In a case in which the first end time period has not elapsed, the ECU 6 returns to the process of step S31. When the first end time period has elapsed, the ECU 6 controls the starter/generator 14 such that the rotation of the crankshaft 13 in the reverse direction is stopped (step S38), warns the rider that trouble with the engine unit EU (step S41) has occurred and terminates the engine start-up process.

Further, in step S34, in a case in which the crankshaft 13 has not been rotated the energization angle, the ECU 6 determines whether or not a predetermined second end time period has elapsed since the timeout setting in step S7 (step S39). The second end time period is set longer than the above-mentioned first end time period. In a case in which the second end time period has not elapsed, the ECU 6 returns to the process of step S34. When the second end time period has elapsed, the ECU 6 stops the energization to the ignition plug 18 (step S40), warns the rider that trouble with the engine unit EU has occurred (step S41) and terminates the engine start-up process.

In this manner, in the second example, the reverse rotation of the crankshaft 13 is stopped based on the detection signal from the crank angle sensor 43 (steps S31, S32). Further, the energization to the ignition plug 18 is stopped based on the detection signal from the crank angle sensor 43 (steps S34, S35). Thus, the reverse rotation of the crankshaft 13 and the energization to the ignition plug 18 can be stopped at an appropriate time.

Further, when the second end time period has elapsed in step S39 after the energization to the ignition plug 18 is started in step S33, the energization to the ignition plug 18 is stopped in step S40. Thus, the energization to the ignition plug 18 is prevented from continuing for a long period of time.

### (5) Valve Driver

### (5-1) Configuration

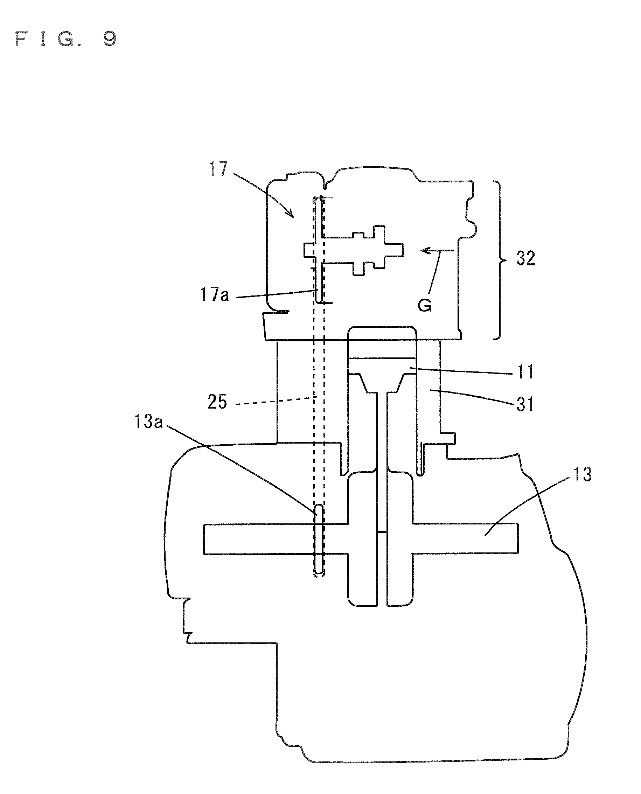

Description will be made of a specific example of the valve driver 17. Fig. 9 is a schematic side view for explaining the specific example of the valve driver 17. The valve driver 17 of Fig. 9 is a camshaft that drives the intake valve 15 and the exhaust valve 16 of Fig. 2 via an intake rocker arm 510 (Fig. 10) and an exhaust rocker arm 520 (Fig. 10) described below. The valve driver 17 is provided in a cylinder head 32 to be rotatable. The valve driver 17 has a sprocket 17a, and the crankshaft 13 has a sprocket 13a. A chain 25 with no ends is attached to the sprocket 13a and the sprocket 17a. Thus, the rotation of the crankshaft 13 is transmitted to the valve driver 17 through the chain 25. The rotation speed of the valve driver 17 is half of the rotation speed of the crankshaft 13.

### (5-2) Driving of Valve

Fig. 10 is a cross sectional view of the valve driver 17 and its peripheral portions. In Fig. 10, the valve driver 17 as viewed in the direction of the arrow G of Fig. 9 is shown. As shown in Fig. 10, the intake rocker arm 510 and the exhaust rocker arm 520 are provided in the cylinder head 32. The intake rocker arm 510 is provided to be swingable with a shaft 511 being used as a center. A roller 512 is provided at one end of the intake rocker arm 510, and an adjuster 513 is provided at the other end. The roller 512 abuts against a main-intake cam 240 or a sub-intake cam 245 of the valve driver 17. Details of the main-intake cam 240 or the sub-intake cam 245 will be described below. The adjuster 513 abuts against the upper end of the intake valve 15. The intake valve 15 is energized in a direction of closing the intake port 21 by a valve spring 15a. In this case, force is applied from the intake valve 15 to the intake rocker arm 510 in a direction of pushing up the adjuster 513. This causes the roller 512 of the intake rocker arm 510 to be pressed against the main-intake cam 240 or the sub-intake cam 245.

The exhaust rocker arm 520 is provided to be swingable with a shaft 521 being used as a center. A roller 522 is provided at one end of the exhaust rocker arm 520, and an adjuster 523 is provided at the other end. The roller 522 abuts against an exhaust cam 230 of the valve driver 17. Details of the exhaust cam 230 will be described below. An adjuster 523 abuts against the upper end of the exhaust valve 16. The exhaust valve 16 is energized in a direction of closing the exhaust port 23 by a valve spring 16a. Thus, force is applied from the exhaust valve 16 to the exhaust rocker arm 520 in a direction of pushing up the adjuster 523, and the roller 522 of the exhaust rocker arm 520 is pressed against the exhaust cam 230.

The valve driver 17 is rotated in a first direction Q1 during the forward rotation of the crankshaft 13 (Fig. 9), and the valve driver 17 is rotated in a second direction Q2 during the reverse rotation of the crankshaft 13. The valve driver 17 is rotated, so that the main-intake cam 240 and the sub-intake cam 245 swing the intake rocker arm 510 and the exhaust cam 230 swings the exhaust rocker arm 520. Thus, the intake valve 15 opens and closes the intake port 21, and the exhaust valve 16 opens and closes the exhaust port 23.

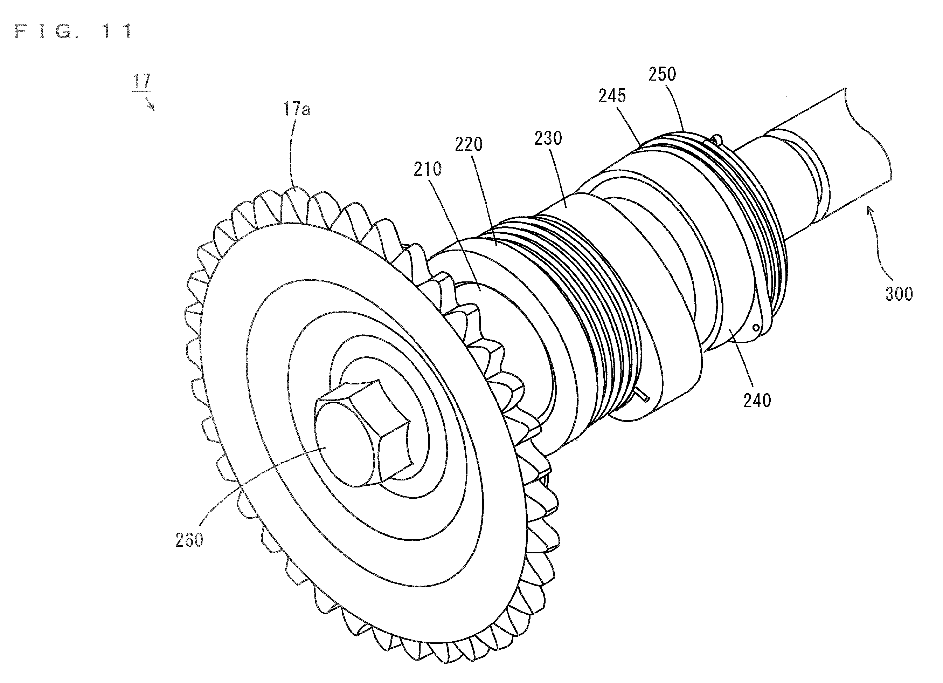

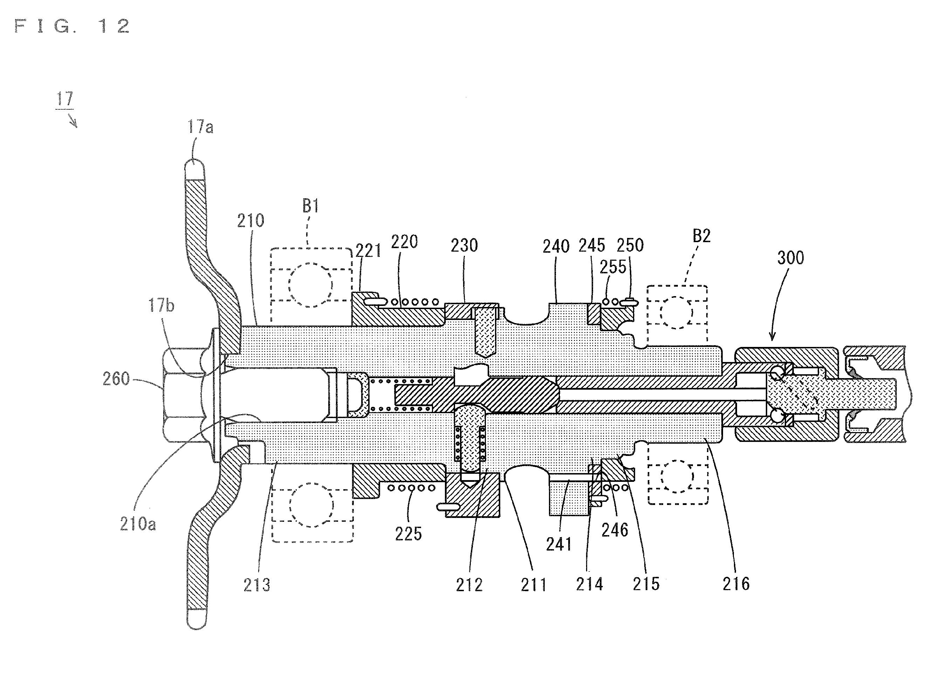

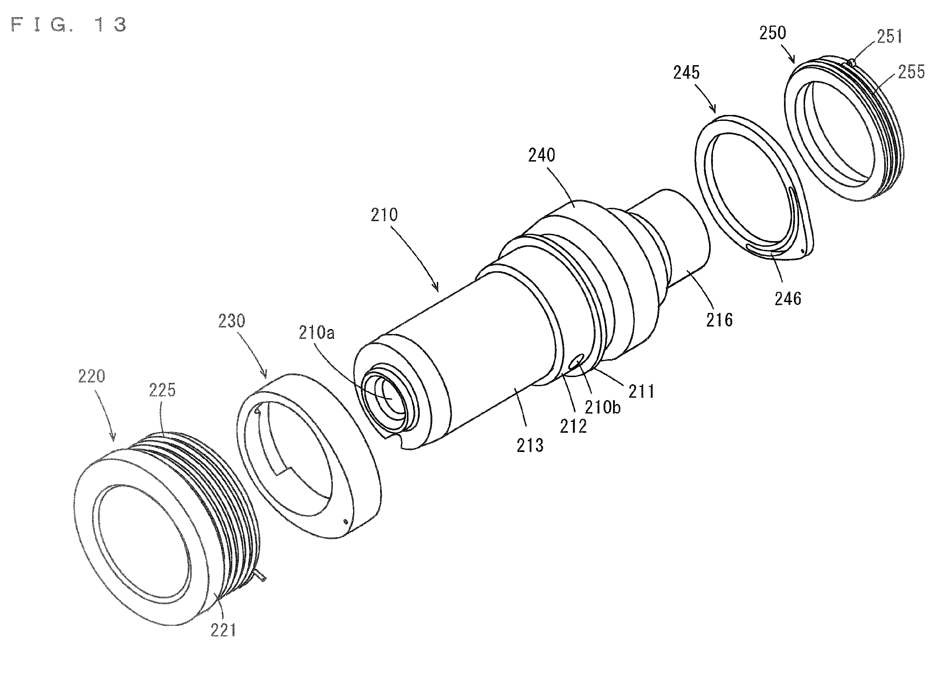

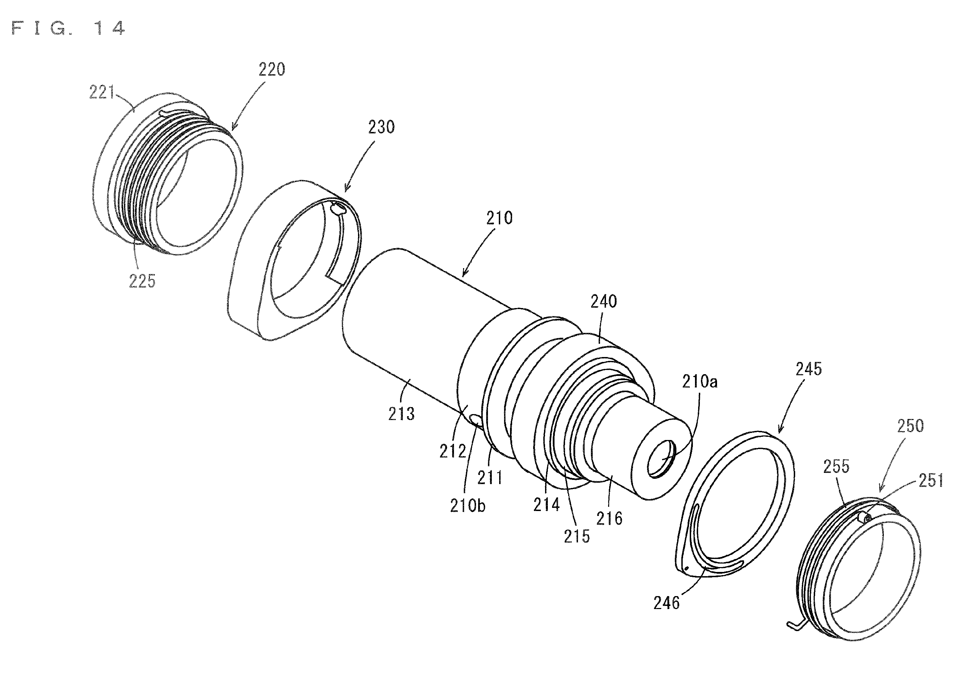

Fig. 11 is an external perspective view of the valve driver 17, and Fig. 12 is a cross sectional view of the valve driver 17. Figs. 13 and 14 are partially exploded perspective views of the valve driver 17 as viewed in the directions different from each other. As shown in Figs. 11 and 12, the valve driver 17 includes the sprocket 17a, a shaft member 210, a spring fixing member 220, the exhaust cam 230, the sub-intake cam 245, a spring fixing member 250 and a switching mechanism 300.

As shown in Figs. 13 and 14, the shaft member 210 is substantially cylindrical and has a through hole 210a along an axial center. In the following description, an axial direction means a direction parallel to the axial center of the shaft member 210, and a circumferential direction means a circumferential direction with the axial center of the shaft member 210 being used as a center. The main-intake cam 240 is integrally provided at the shaft member 210. The exhaust cam 230 and the spring fixing member 220 are attached to a portion of the shaft member 210 on one side of the main-intake cam 240. Further, the sub-intake cam 245 and the spring fixing member 250 are attached to a portion of the shaft member 210 on the other side of the main-intake cam 240.

As shown in Fig. 13, a flange portion 211, a cam attachment portion 212 and a bearing portion 213 are provided at a portion of the shaft member 210 on the one side of the main-intake cam 240. An outer diameter of the cam attachment portion 212 is smaller than an outer diameter of the flange portion 211, and an outer diameter of the bearing portion 213 is smaller than the outer diameter of the cam attachment portion 212. A through hole 210b is formed at the cam attachment portion 212. The through hole 210a and the through hole 210b communicate with each other as described below.

The exhaust cam 230 is substantially annular. An inner diameter of the exhaust cam 230 is substantially equal to the outer diameter of the cam attachment portion 212 of the shaft member 210. The exhaust cam 230 is positioned on the cam attachment portion 212 of the shaft member 210 to abut against the flange portion 211. As described below, the exhaust cam 230 is provided to be rotatable in the circumferential direction in a constant angular range with respect to the shaft member 210.

The spring fixing member 220 is substantially cylindrical. An inner diameter of the spring fixing member 220 is substantially equal to an outer diameter of the bearing portion 213 of the shaft member 210. The spring fixing member 220 is positioned on the bearing portion 213 of the shaft member 210 to abut against the side surface of the cam attachment portion 212. The spring fixing member 220 is provided not to be rotated in the circumferential direction with respect to the shaft member 210.

A flange portion 221 is provided at the end of the spring fixing member 220. A twisted coil spring 225 is arranged on the outer peripheral surface of the spring fixing member 220 except for the flange portion 221. As shown in Fig. 12, one end of the twisted coil spring 225 is fixed to the flange portion 221 of the spring fixing member 220, and the other end is fixed to the side surface of the exhaust cam 230. The exhaust cam 230 is energized in the second direction Q2 (Fig. 10) with respect to the shaft member 210 by the twisted coil spring 225.

As shown in Fig. 14, a cam attachment portion 214, a spring attachment portion 215 and a bearing portion 216 are provided at a portion of the shaft member 210 on the other side of the main-intake cam 240. An outer diameter of the spring attachment portion 215 is smaller than an outer diameter of the cam attachment portion 214, and an outer diameter of the bearing portion 216 is smaller than an outer diameter of the spring attachment portion 215.

A sub-intake cam 245 is substantially annular. An inner diameter of the sub-intake cam 245 is substantially equal to the outer diameter of the cam attachment portion 214 of the shaft member 210. The sub-intake cam 245 is positioned on the cam attachment portion 214 of the shaft member 210 to abut against the main-intake cam 240. A long-sized opening 246 that extends in the circumferential direction is formed at the sub-intake cam 245. Further, a fitting pin 241 (Fig. 12) is fixed to the main-intake cam 240 to project from the other side. A tip end of the fitting pin 241 is fitted into the opening 246 of the sub-intake cam 245. Details of the sub-intake cam 245 will be described below.

The spring fixing member 250 is substantially annular. An inner diameter of the spring fixing member 250 is substantially equal to an outer diameter of the spring attachment portion 215 of the shaft member 210. The spring fixing member 250 is positioned on the spring attachment portion 215 to abut against the side surface of the cam attachment portion 214. The spring fixing member 250 is provided not to be rotated in the circumferential direction with respect to the shaft member 210.

A projection 251 is provided at the end of the spring fixing member 250. A twisted coil spring 255 is arranged on the outer peripheral surface of the spring fixing member 250. As shown in Fig. 12, one end of the twisted coil spring 255 is fixed to the projection 251 of the spring fixing member 250, and the other end is fixed to the side surface of the sub-intake cam 245. The sub-intake cam 245 is energized by the twisted coil spring 255 in the first direction Q1 (Fig. 10) with respect to the shaft member 210.

As shown in Fig. 12, the sprocket 17a is arranged at one end of the bearing portion 213 of the shaft member 210 to be perpendicular to the axial direction. An opening 17b is formed at the center of the sprocket 17a. Further, a screw thread is formed at the inner peripheral surface of one end of the through hole 210a. A bolt 260 is screwed into the through hole 210a through the opening 17b of the sprocket 17a. Thus, the sprocket 17a is fixed to the shaft member 210.

In the cylinder head 32 of Fig. 10, a bearing B1 is provided to abut against the outer peripheral surface of the bearing portion 213 of the shaft member 210, and a bearing B2 is provided to abut against the outer peripheral surface of the bearing portion 216. The shaft member 210 is held by the bearings B1, B2 to be rotatable in the circumferential direction.

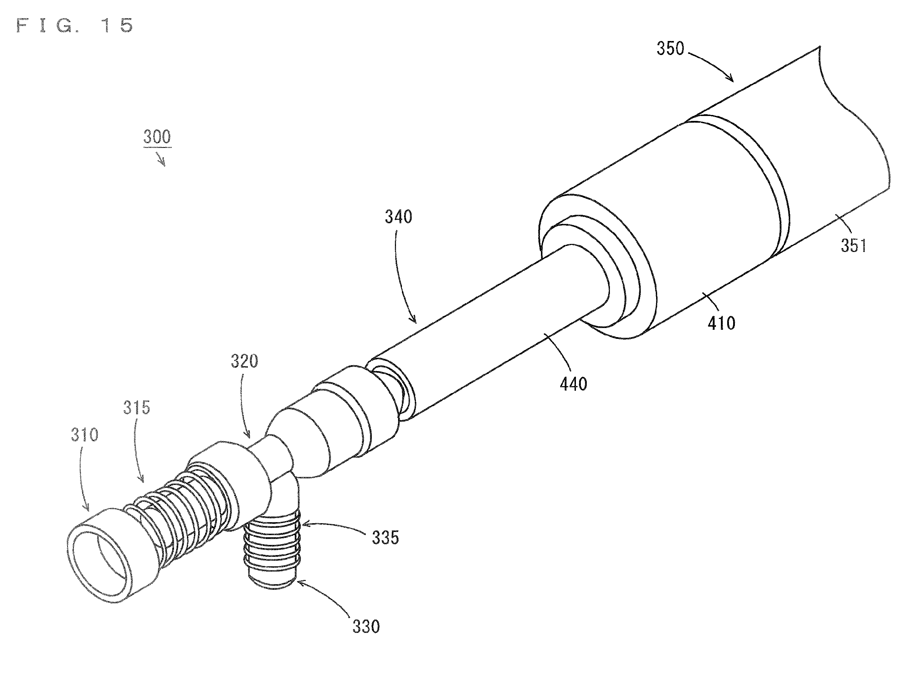

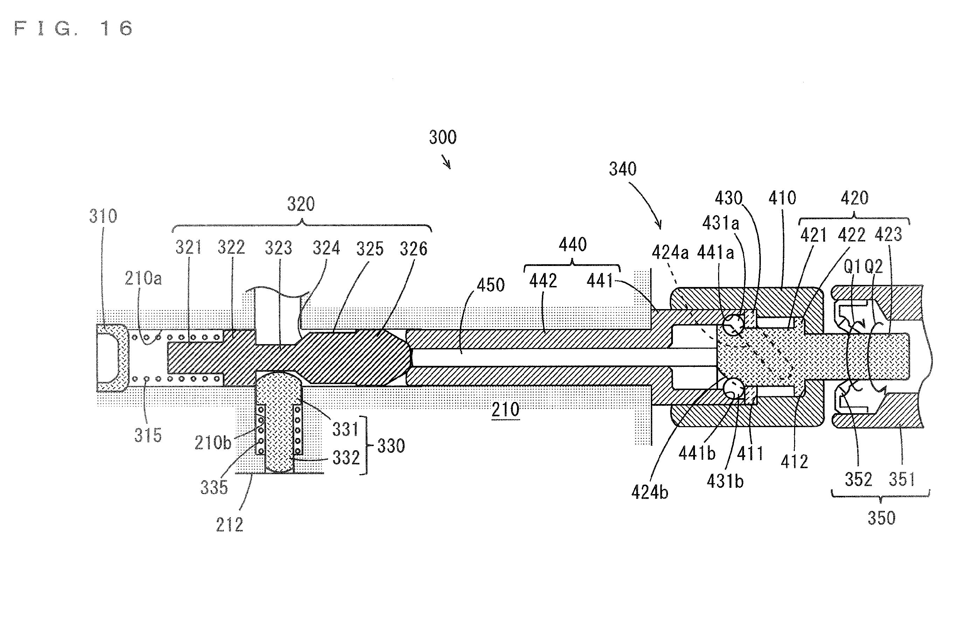

Fig. 15 is an external perspective view of the switching mechanism 300, and Fig. 16 is a cross sectional view of the switching mechanism 300. As shown in Figs. 15 and 16, the switching mechanism 300 includes a spring engaging member 310, a spring 315, a moving member 320, a fitting member 330, a spring 335, a pressure mechanism 340 and a sliding mechanism 350.

As shown in Fig. 16, the spring engaging member 310 is arranged to be opposite to a tip end of the bolt 260 of Fig. 12 in the through hole 210a of the shaft member 210. One end of the spring 315 is engaged with the spring engaging member 310.

The moving member 320 is arranged to be movable in the axial direction in the through hole 210a of the shaft member 210 to be adjacent to the spring engaging member 310. The moving member 320 has a movement blocking portion 321, a spring engaging portion 322, a first abutment portion 323, a tapered portion 324, a second abutment portion 325 and a pressure receiving portion 326. The movement blocking portion 321 is provided to project from the spring engaging portion 322 in the axial direction. An outer diameter of the spring engaging portion 322 is larger than an outer diameter of the movement blocking portion 321 and is substantially equal to an inner diameter of the through hole 210a. The spring 315 is arranged to surround the outer peripheral surface of the movement blocking portion 321, and the other end of the spring 315 is engaged with the spring engaging portion 322.

The tapered portion 324 is provided between the first and second abutment portions 323, 325. An outer diameter of the second abutment portion 325 is larger than an outer diameter of the first abutment portion 323. The tapered portion 324 is formed such that its outer diameter gradually increases from the first abutment portion 323 towards the second abutment portion 325. Thus, the outer peripheral surface of the first abutment portion 323 and the outer peripheral surface of the second abutment portion 325 are connected with each other via the outer peripheral surface of the tapered portion 324. The pressure receiving portion 326 is provided at the other end of the moving member 320.

The through hole 210b is formed at the shaft member 210 to perpendicularly intersect with the through hole 210a. The through hole 210b is opened on the outer peripheral surface of the cam attachment portion 212. The fitting member 330 is arranged in the through hole 210b. The fitting member 330 is constituted by an abutment portion 331 and a fitting portion 332. An outer diameter of the abutment portion 331 is larger than an outer diameter of the fitting portion 332. The abutment portion 331 has an abutment surface convexly curving. The abutment surface of the abutment portion 331 abuts against the first abutment portion 323, the tapered portion 324 or the second abutment portion 325 of the moving member 320 depending on the position of the moving member 320 in the axial direction. The spring 335 is arranged to surround the outer peripheral surface of the fitting member 332. One end of the spring 335 is engaged with the abutment portion 331, and the other end is engaged with a step formed at the end of the through hole 210b. In a state in which the abutment portion 331 is abutting against the first abutment portion 323, the fitting portion 332 of the fitting member 330 is stored in the through hole 210b of the shaft member 210. On the other hand, in a state in which the abutment portion 331 is abutting against the second abutment portion 325, the fitting portion 332 of the fitting member 330 projects from the outer peripheral surface of the cam attachment portion 212 of the shaft member 210.

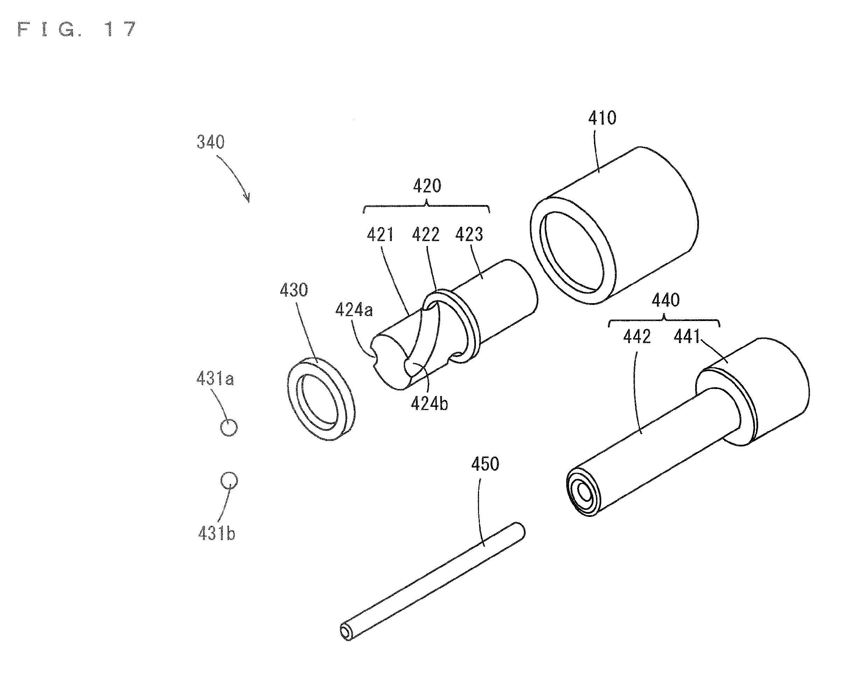

Fig. 17 is an exploded perspective view of the pressure mechanism 340. As shown in Fig. 17, the pressure mechanism 340 includes a cover member 410, a rotation member 420, an annular member 430, ball members 431 a, 431 b, a holding member 440 and a bar-shaped member 450. The cover member 410 is substantially cylindrical. As shown in Fig. 16, an inner diameter of the cover member 410 is set to decrease in steps from one end to the other end. Thus, steps 411, 412 are formed inside of the cover member 410.

As shown in Fig. 17, the rotation member 420 is substantially columnar and has a ball receiving portion 421, a flange portion 422 and a sliding portion 423. A pair of grooves 424a, 424b spirally extending is provided at the outer peripheral surface of the ball receiving portion 421 to be symmetrical with respect to an axial center of the rotation member 420. The holding member 440 is substantially cylindrical and has a ball holding portion 441 and a bar holding portion 442. Outer and inner diameters of the ball holding portion 441 are larger than outer and inner diameters of the bar holding portion 442, respectively.

As shown in Fig. 16, the bar-shaped member 450 is inserted into the bar holding portion 442 of the holding member 440. The bar holding portion 442 is inserted into the through hole 210a of the shaft member 210. The bar-shaped member 450 is held by the bar holding portion 442 to extend in the axial direction of the shaft member 210. One end of the bar-shaped member 450 abuts against the pressure receiving portion 326 of the moving member 320 in the through hole 210a. A pair of recesses 441 a, 441b is formed at the inner peripheral surface of the ball holding portion 441 of the holding member 440. The ball members 431a, 431b are fitted into the recesses 441a, 441b, respectively. Further, the annular member 430 is arranged to abut against one end of the ball holding portion 441. Movement in the axial and circumferential directions of the ball members 431 a, 431 b with respect to the ball holding portion 441 is blocked by the recesses 441a, 441b of the ball holding portion 441 and the annular member 430. One end of the ball receiving portion 421 of the rotation member 420 is inserted into the ball holding portion 441 of the holding member 440, and the ball members 431a, 431b are fitted into the grooves 424a, 424b, respectively. The other end of the bar-shaped member 450 abuts against the end surface of the ball receiving portion 421 of the rotation member 420.

The cover member 410 is attached to the holding member 440 and the rotation member 420 to cover the outer peripheral surface of the ball holding portion 441 of the holding member 440 and the outer peripheral surface of the ball receiving portion 421 of the rotation member 420. An inner diameter of one end of the cover member 410 is substantially equal to outer diameters of the ball holding portion 441 of the holding member 440 and the annular member 430, and an inner diameter of the other end of the cover member 410 is substantially equal to an outer diameter of the sliding portion 423 of the rotation member 420. An inner diameter of an intermediate portion of the cover member 410 is substantially equal to an outer diameter of the flange portion 422 of the rotation member 420.

The annular member 430 abuts against the step 411 of the cover member 410 in the cover member 410. Further, in the state of Fig. 16, the flange portion 422 of the rotation member 420 abuts against the step 412. The sliding portion 423 of the rotation member 420 projects from the other end of the cover member 410 in the axial direction.

The pressure mechanism 340 is integrally rotated with the shaft member 210 except for the rotation member 420. The rotation member 420 is provided to be rotatable by a constant angle with respect to the shaft member 210 in the circumferential direction.

The sliding mechanism 350 includes a fixing member 351 and a sliding member 352. The fixing member 351 is substantially cylindrical and fixed to the cylinder head 32 of Fig. 10 to surround the outer peripheral surface of the sliding portion 423 of the rotation member 420. The sliding member 352 is annular and attached to the inner peripheral surface of the fixing member 351. The sliding member 352 is elastic and abuts against the outer peripheral surface of the sliding portion 423 of the rotation member 420.

As described above, the ball members 431a, 431b are fitted into the spiral grooves 424a, 424b formed at the outer peripheral surface of the rotation member 420. Therefore, the rotation member 420 is rotated with respect to the shaft member 210, so that the rotation member 420 is moved in the axial direction with respect to the shaft member 210. In the present embodiment, the rotation member 420 is rotated in the first direction Q1 with respect to the shaft member 210, so that the rotation member 420 is moved in a direction away from the shaft member 210. On the other hand, the rotation member 420 is rotated in the second direction Q2 with respect to the shaft member 210, so that the rotation member 420 is moved in a direction closer to the shaft member 210.

During the forward rotation of the crankshaft 13, the fitting portion 332 of the fitting member 330 is kept in a state of projecting from the outer peripheral surface of the cam attachment portion 212 of the shaft member 210 (hereinafter referred to as a rotation blocked state). On the other hand, during the reverse rotation of the crankshaft 13, the fitting portion 332 of the fitting member 330 is kept in a state of being stored in the through hole 210b of the shaft member 210 (hereinafter referred to as a rotatable state). Description will be made below of switching between the rotation blocked state and the rotatable state.

### (5-3) Main-Intake Cam and Sub-Intake Cam

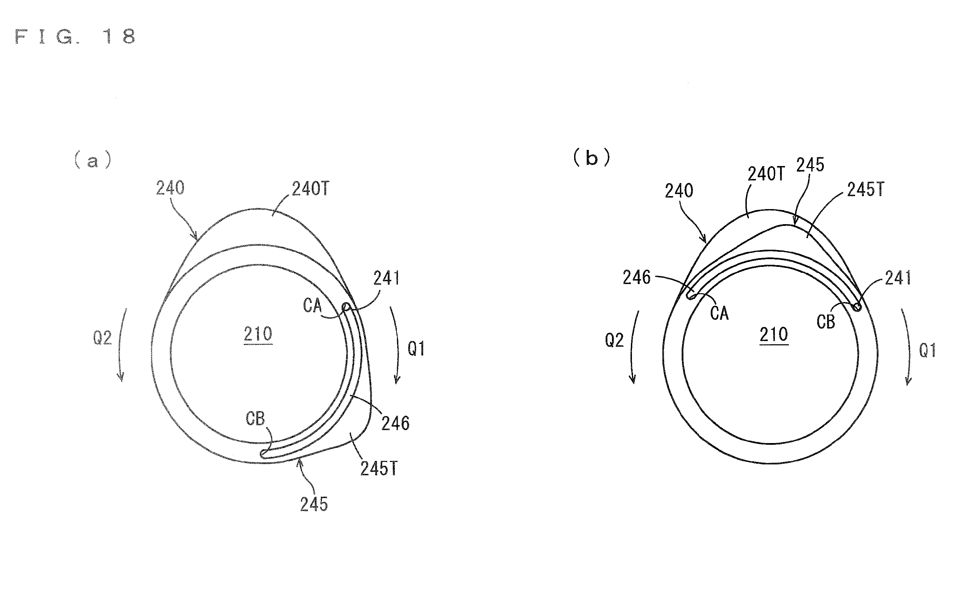

Figs. 18(a) and 18(b) are diagrams for explaining the main-intake cam 240 and the sub-intake cam 245. As shown in Figs. 18(a) and 18(b), the fitting pin 241 attached to the main-intake cam 240 is fitted into the opening 246 of the sub-intake cam 245. The main-intake cam 240 is integrally provided with the shaft member 210, and the sub-intake cam 245 is rotatable in the circumferential direction with respect to the shaft member 210. The sub-intake cam 245 is rotated with respect to the shaft member 210, so that the fitting pin 241 is moved in the circumferential direction in the opening 246. A rotatable angular range of the sub-intake cam 245 with respect to the shaft member 210 depends on a length of the opening 246.

As shown in Fig. 18(a), the fitting pin 241 abuts against one end CA of the opening 246 of the sub-intake cam 245, so that the rotation of the intake cam 245 in the first direction Q1 is blocked. In this state, a cam nose 245T of the sub-intake cam 245 does not overlap with a cam nose 240T of the main-intake cam 240. The position of the sub-intake cam 245 of Fig. 18(a) is an example of a first position.

On the other hand, as shown in Fig. 18(b), the fitting pin 241 abuts against the other end CB of the opening 246 of the sub-intake cam 245, so that the rotation of the intake cam 245 in the second direction Q2 is blocked. In this state, the entire cam nose 245T of the sub-intake cam 245 overlaps with the cam nose 240T of the main-intake cam 240. The position of the sub-intake cam 245 of Fig. 18(b) is an example of a second position.

A length from the axial) center of the shaft member 210 to the tip end of the cam nose 240T is larger than a length from the axial center of the shaft member 210 to the tip end of the cam nose 245T. Here, the tip end of the cam nose refers to a portion of the outer peripheral surface of the cam nose at which a length from the axial center of the shaft member 210 is the largest. Further, in the following description, a rise portion of the cam nose refers to a boundary portion between the cam nose and another portion and a portion of the outer peripheral surface of the cam nose at which a length from the axial center of the shaft member 210 is the smallest.

As described above, the sub-intake cam 245 is energized in the first direction Q1 (Fig. 16) by the twisted coil spring 255 of Fig. 12. Energizing force in the first direction Q1 applied from the twisted coil spring 255 to the sub-intake cam 245 is smaller than force in the second direction Q2 applied from the intake rocker arm 510 of Fig. 10 to the sub-intake cam 245 as a counterforce during the rotation of the valve driver 17. Therefore, in a case in which the force in the second direction Q2 is applied from the intake rocker arm 510 to the sub-intake cam 245 during the rotation of the valve driver 17, the sub-intake cam 245 is rotated in the second direction Q2 in a rotatable range with respect to the shaft member 210.

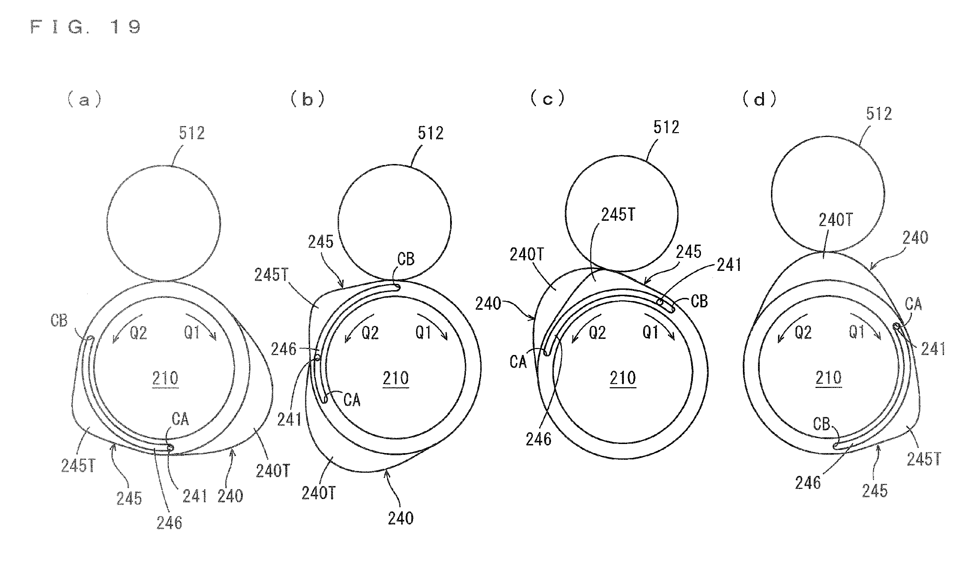

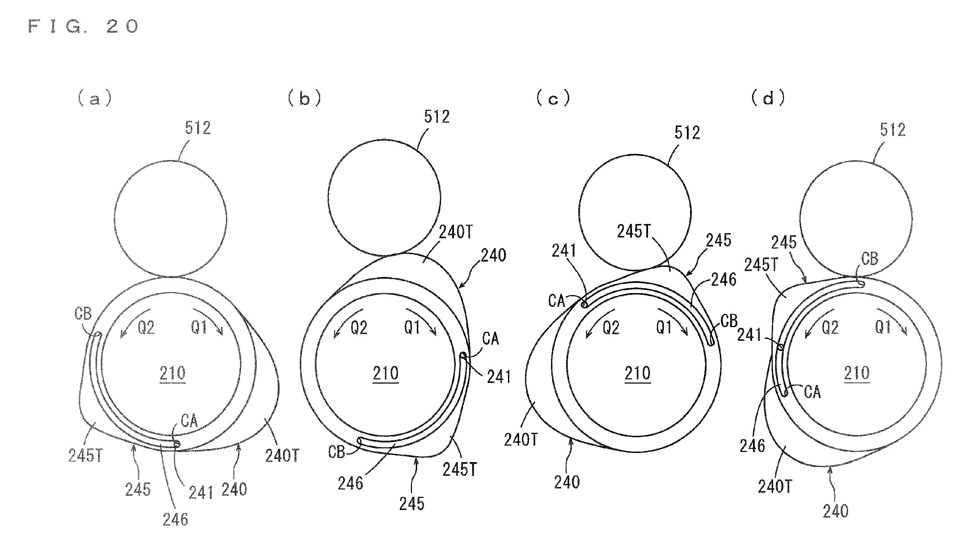

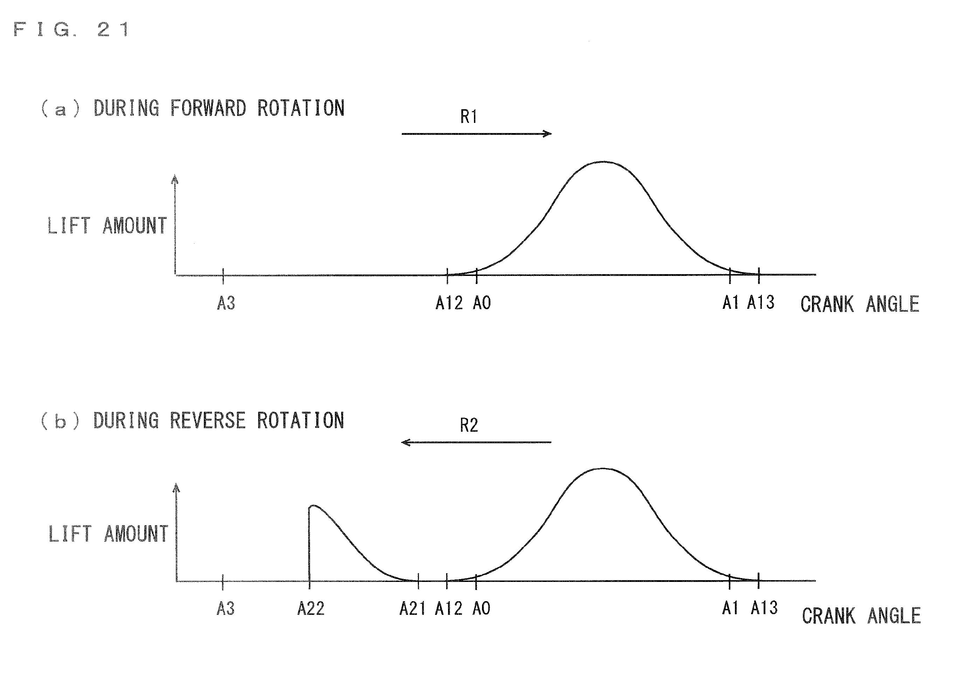

The function of the main-intake cam 240 and the sub-intake cam 245 with respect to the roller 512 of the intake rocker arm 510 of Fig. 10 will be described. Figs. 19(a) to 19(d) are diagrams for explaining the function of the main-intake cam 240 and the sub-intake cam 245 during the forward rotation of the crankshaft 13, and Figs. 20(a) to 20(d) are diagrams for explaining the function of the main-intake cam 240 and the sub-intake cam 245 during the reverse rotation of the crankshaft 13. Figs. 21(a) and 21(b) are diagrams showing lift amounts of the intake valve 15.

The shaft member 210 is rotated in the first direction Q1 during the forward rotation of the crankshaft 13. As shown in Fig. 19(a), in a state in which neither the cam nose 245T of the sub-intake cam 245 nor the cam nose 240T of the main-intake cam 240 is abutting against the roller 512, the force in the second direction Q2 is not applied from the roller 512 to the sub-intake cam 245. In this case, the fitting pin 241 is kept in a state of abutting against the one end CA of the opening 246 of the sub-intake cam 245 by the energizing force of the twisted coil spring 255 (Fig. 12). Further, the intake valve 15 of Fig. 10 is not lifted and the intake port 21 is closed. Hereinafter, the position of the roller 512 with the valve 15 not being lifted is referred to as an initial position.

As shown in Fig. 19(b), when the rise portion of the cam nose 245T of the sub-intake cam 245 abuts against the roller 512, the force in the second direction Q2 is applied from the roller 512 to the sub-intake cam 245. In this case, the sub-intake cam 245 is rotated in the second direction Q2 with respect to the shaft member 210 such that the rise portion of the cam nose 245T is kept in a state of abutting against the roller 512. Therefore, the roller 512 is not driven by the sub-intake cam 245 and kept at the initial position.

Next, as shown in Fig. 19(c), when the cam nose 240T of the main-intake cam 240 reaches the roller 512, the cam nose 240T pushes up the roller 512. Thus, as shown in Fig. 21 (a), the intake valve 15 is lifted and the intake port 21 is opened in the range from the angle A12 to the angle A13.

Then, as shown in Fig. 19(d), when the tip end of the cam nose 240T of the main-intake cam 240 comes closer to the roller 512, the cam nose 245T of the sub-intake cam 245 is moved away from the roller 512. In this case, the force in the second direction Q2 is not applied from the roller 512 to the sub-intake cam 245. Therefore, the sub-intake cam 245 is rotated in the first direction Q1 with respect to the shaft member 210 by the energizing force of the twisted coil spring 255 (Fig. 12). Thus, the fitting pin 241 returns to be in the state of abutting against the one end CA of the opening 246 of the sub-intake cam 245. Thereafter, the operation of Figs. 19(a) to 19(d) is repeated.

In this manner, during the forward rotation of the crankshaft 13, only the main-intake cam 240 drives the intake rocker arm 510 with the sub-intake cam 245 not driving the intake rocker arm 510. Therefore, the intake valve 15 of Fig. 10 is lifted and the intake port 21 is opened only in the range from the angle A12 to the angle A13 of Fig. 21(a).

During the reverse rotation of the crankshaft 13, the shaft member 210 is rotated in the second direction Q2. As shown in Fig. 20(a), in a state in which the roller 512 does not abut against the cam nose 245T of the sub-intake cam 245, similarly to the state of Fig. 19(a), the force in the second direction Q2 is not applied from the roller 512 to the sub-intake cam 245. In this case, the fitting pin 241 is kept in the state of abutting against the one end CA of the opening 246 of the sub-intake cam 245 by the energizing force of the twisted coil spring 255 (Fig. 12).

As shown in Fig. 20(b), when the cam nose 240T of the main-intake cam 240 reaches the roller 512, the cam nose 240T pushes up the roller 512. Thus, as shown in Fig. 21(b), the intake valve 15 is lifted and the intake port 21 is opened in the range from the angle A13 to the angle A12.

Then, as shown in Fig. 20(c), when the cam nose 245T of the sub-intake cam 245 reaches the roller 512, the force in the first direction Q1 is applied from the roller 512 to the sub-intake cam 245. In this case, the fitting pin 241 is kept in the state of abutting against the one end CA of the opening 246 of the sub-intake cam 245, and the cam nose 245T pushes up the roller 512. Thus, as shown in Fig. 21(b), the intake valve 15 is lifted and the intake port 21 is opened in the range from the angle A21 to the angle A22.

Next, as shown in Fig. 20(d), when the abutment position of the roller 512 goes beyond the tip end of the cam nose 245T, the force in the second direction Q2 is applied from the roller 512 to the sub-intake cam 245. This causes the sub-intake cam 245 to be rotated in the second direction Q2 with respect to the shaft member 210 and the roller 512 to return to the initial position. In this case, as shown in Fig. 21 (b), the lift amount of the intake valve 15 sharply decreases at the angle A22.

In this manner, during the reverse rotation of the crankshaft 13, both the main intake cam 240 and the sub-intake cam 245 drive the intake rocker arm 510. Therefore, the intake valve 15 of Fig. 10 is lifted and the intake port 21 is opened in the range from the angle A13 to the angle A12 and the range from the angle A21 to the angle A22 of Fig. 21(b).

The above-mentioned results realize the opening and closing operation of the intake port 21 during the normal running shown in Fig. 3 and the opening and closing operation of the intake port 21 at the time of the start-up shown in Fig. 4.

### (5-4) Exhaust Cam

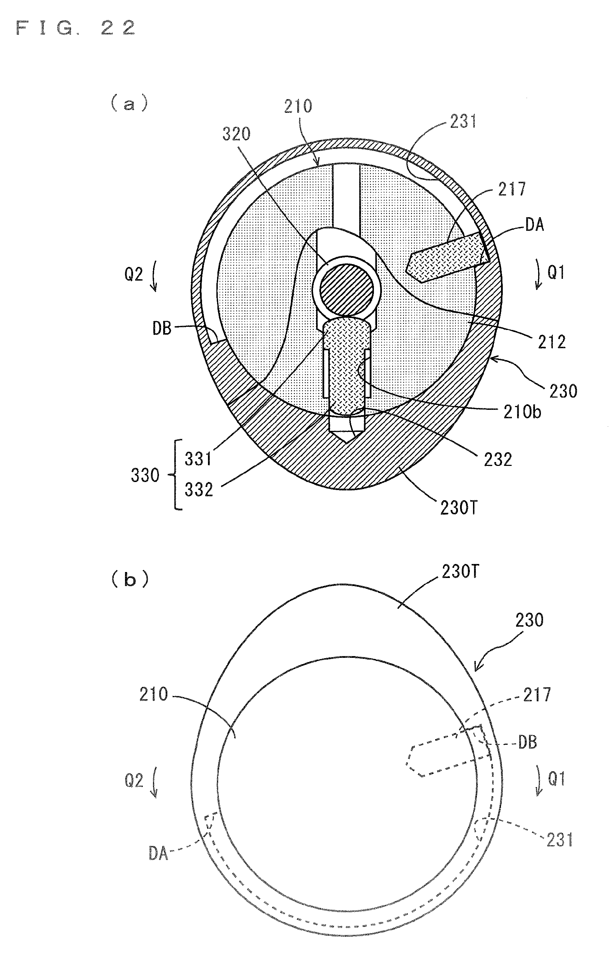

Figs. 22(a) and 22(b) are diagrams for explaining the exhaust cam 230. As shown in Fig. 22(a), a fitting pin 217 is fixed to the cam attachment portion 212 of the shaft member 210 to project from the outer peripheral surface in a direction perpendicular to the axis direction. A groove 231 is formed at the inner peripheral surface of the exhaust cam 230 to extend in the circumferential direction. The tip end of the fitting pin 217 is arranged in the groove 231 of the exhaust cam 230.

The exhaust cam 230 is rotated with respect to the shaft member 210, so that the fitting pin 217 is moved in the groove 231. A rotatable angular range of the exhaust cam 230 with respect to the shaft member 210 depends on a length of the groove 231.

As shown in Fig. 22(a), the fitting pin 217 abuts against one end DA of the groove 231 of the exhaust cam 230, so that the rotation of the exhaust cam 230 in the second direction Q2 with respect to the shaft member 210 is blocked. Further, as shown in Fig. 22(b), the fitting pin 217 abuts against the other end DB of the groove 231 of the exhaust cam 230, so that the rotation of the exhaust cam 230 in the first direction Q1 with respect to the shaft member 210 is blocked. The position of the exhaust cam 230 of Fig. 22(a) is an example of a fourth position, and the position of the exhaust cam 230 of Fig. 22(b) is an example of a third position.

A recess 232 is formed at the inner peripheral surface of the exhaust cam 230. In a state in which the fitting pin 217 is abutting against the one end DA of the groove 231 of the exhaust cam 230 (the state of Fig. 22(a)), the recess 232 is positioned on an extending line of the through hole 210b. In this state, when the fitting portion 332 of the fitting member 330 is fitted into the recess 232, the rotation of the exhaust cam 230 with respect to the shaft member 210 is blocked.

As described below, the switching mechanism 300 (Fig. 16) is kept in the rotation blocked state during the forward rotation of the crankshaft 13. In this case, the fitting portion 332 of the fitting member 330 is fitted into the recess 232 with the fitting pin 217 abutting against the one end DA of the groove 231 of the exhaust cam 230, and the rotation of the exhaust cam 230 with respect to the shaft member 210 is blocked. On the other hand, during the reverse rotation of the crankshaft 13, the switching mechanism 300 (Fig. 12) is kept in the rotatable state Thus, the exhaust cam 230 is rotatable with respect to the shaft member 210 in a certain range.

As described above, the exhaust cam 230 is energized in the second direction Q2 by the twisted coil spring 225 of Fig. 12. The energizing force in the second direction Q2 applied from the twisted coil spring 225 to the exhaust cam 230 is smaller than the force in the first direction Q1 applied from the exhaust rocker arm 520 of Fig. 10 to the exhaust cam 230 as a counterforce during the rotation of the valve driver 17. Therefore, in a case in which the force in the first direction Q1 is applied from the exhaust rocker arm 520 to the exhaust cam 230 during the rotation of the valve driver 17, the exhaust cam 230 is rotated in the first direction Q1 with respect to the shaft member 210 in a rotatable range.

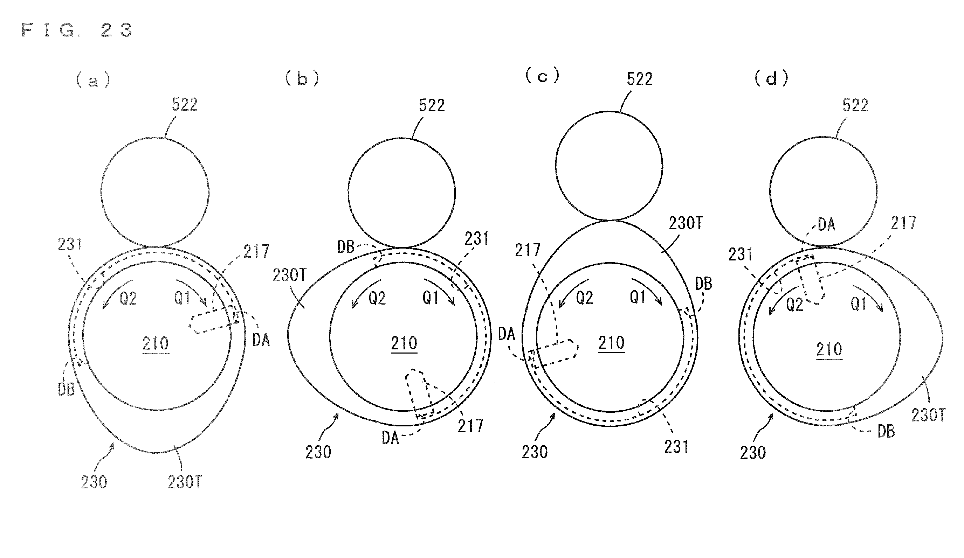

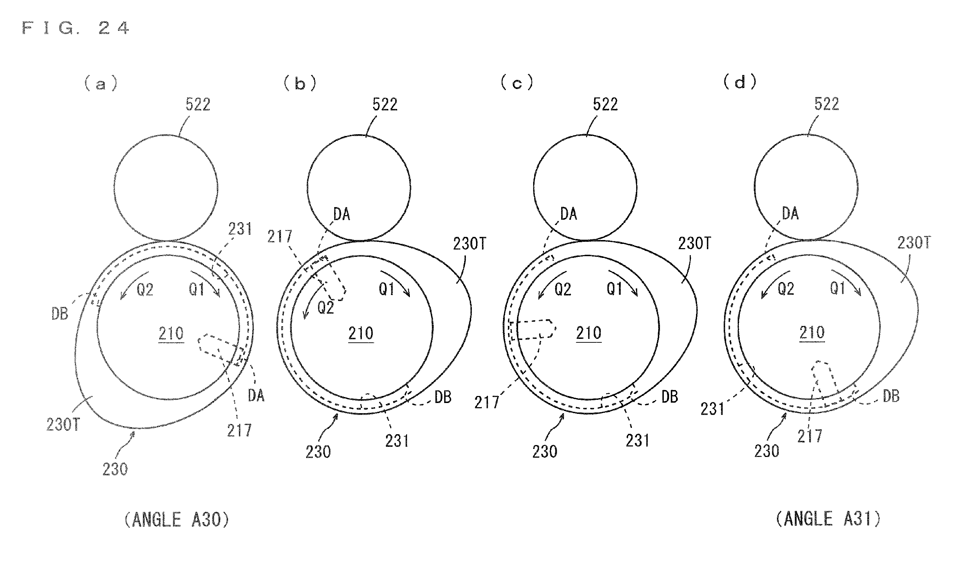

Function of the exhaust cam 230 with respect to the roller 522 of the exhaust rocker arm 520 of Fig. 10 will be described. Figs. 23(a) to 23(d) are diagrams for explaining the function of the exhaust cam 230 during the forward rotation of the crankshaft 13, and Figs. 24(a) to 24(d) are diagrams for explaining the function of the exhaust cam 230 during the reverse rotation of the crankshaft 13.

During the forward rotation of the crankshaft 13, as shown in Figs. 23(a) to 23(d), the exhaust cam 230 is integrally rotated with the shaft member 210 in the first direction Q1 with the fitting pin 217 abutting against the one end DA of the groove 231 of the exhaust cam 230. In this case, a cam nose 230T of the exhaust cam 230 pushes up the roller 522. Thus, the exhaust valve 16 of Fig. 10 is lifted and the exhaust port 23 is opened in the range from the angle A15 to the angle A16 of Fig. 3.

Fig. 24(a) shows the state of the exhaust cam 230 when the crank angle is the angle A30 of Fig. 4, and Fig. 24(d) shows the state of the exhaust cam 230 when the crank angle is the angle A31 of Fig. 4. Figs. 24(b) and 24(c) show the states of the exhaust cam 230 between the states of Fig. 24(a) and Fig. 24(d). As described above, the reverse rotation of the crankshaft 13 is performed in a range from the angle A30 to the angle A31 of Fig. 4.

During the reverse rotation of the crankshaft 13, the exhaust cam 230 can be rotated with respect to the shaft member 210. Further, the exhaust cam 230 is energized in the second direction Q2 by the twisted coil spring 225 of Fig. 12. When the crank angle is at the angle A30 of Fig. 4, the cam nose 230T of the exhaust cam 230 is not abutting against the roller 522 as shown in Fig. 24(a). Therefore, the force in the first direction Q1 is not applied from the roller 522 to the exhaust cam 230. and the fitting pin 217 is kept in a state of abutting against the one end DA of the groove 231 by the energizing force of the twisted coil spring 225.

Then, as shown in Fig. 24(b), when the rise portion of the can nose 230T of the exhaust cam 230 abuts against the roller 522, the force in the first direction Q1 is applied from the roller 522 to the exhaust cam 230. The force in the first direction Q1 applied from the roller 522 to the cam nose 230T is larger than the force in the second direction Q2 applied from the twisted coil spring 225 to the exhaust cam 230. Therefore, as shown in Fig. 24(c), only the shaft member 210 is rotated in the second direction Q2 while the rise portion of the cam nose 230T is kept in a state of abutting against the roller 522 with the cam nose 230T not pushing up the roller 522.

Thereafter, when the rotation of the shaft member 210 in the second direction Q2 is continued, the fitting pin 217 abuts against the other end DB of the groove 231 and the exhaust cam 230 is integrally rotated with the shaft member 210. In this case, the roller 522 is pushed upward by the cam nose 230T. However, in the present embodiment, even when the crank angle reaches the angle A31 of Fig. 4, the fitting pin 217 does not abut against the other end DB of the groove 231 as shown in Fig. 24(d). Therefore, during the reverse rotation of the crankshaft 13, the exhaust rocker arm 520 is not driven and the exhaust port 23 is not opened.

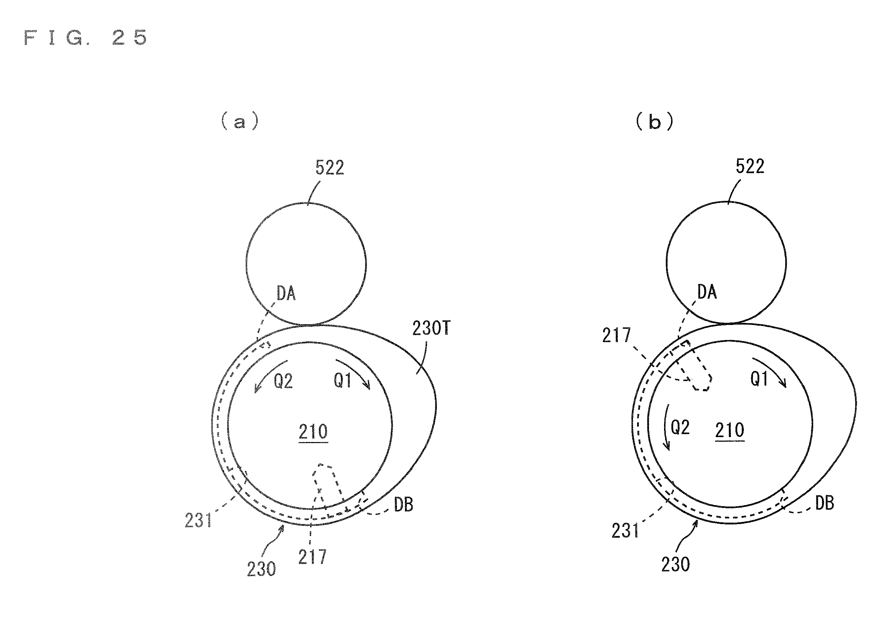

Figs. 25(a) and 25(b) are diagrams showing the operation of the exhaust cam 230 right after the rotation direction of the crankshaft 13 is switched from the reverse direction to the forward direction. As shown in Fig. 25(a), the rise portion of the cam nose 230T abuts against the roller 522 and the fitting pin 217 is positioned between the one end DA and the other end DB of the groove 231 right after the rotation direction of the crankshaft 13 is switched from the reverse direction to the forward direction. In this case, only the shaft member 210 is rotated in the first direction Q1 while the rise portion of the cam nose 230T is kept in the state of abutting against the roller 522 by the energizing force of the twisted coil spring 225 of Fig. 12.

Thereafter, as shown in Fig. 25(b), when the fitting pin 217 abuts against the one end DA of the groove 231, the switching mechanism 300 switches to the rotation blocked state, and the rotation of the exhaust cam 231 with respect to the shaft member 210 is blocked. Thereafter, as shown in Figs. 23(a) to 23(d), the exhaust cam 230 is integrally rotated with the shaft member 210 and drives the exhaust rocker arm 520.

In this manner, the configuration of the exhaust cam 230 shown in Figs. 22(a) and 22(b) causes the exhaust port 23 to be opened in the range from the angle A15 to the angle A16 only during the forward rotation of the crankshaft 13, and the exhaust port 23 to be opened during the reverse rotation of the crankshaft 13. In this case, the intake operation of the fuel-air mixture can be efficiently performed in the range from the angle A21 to the angle A22.

### (5-5) Switching Mechanism

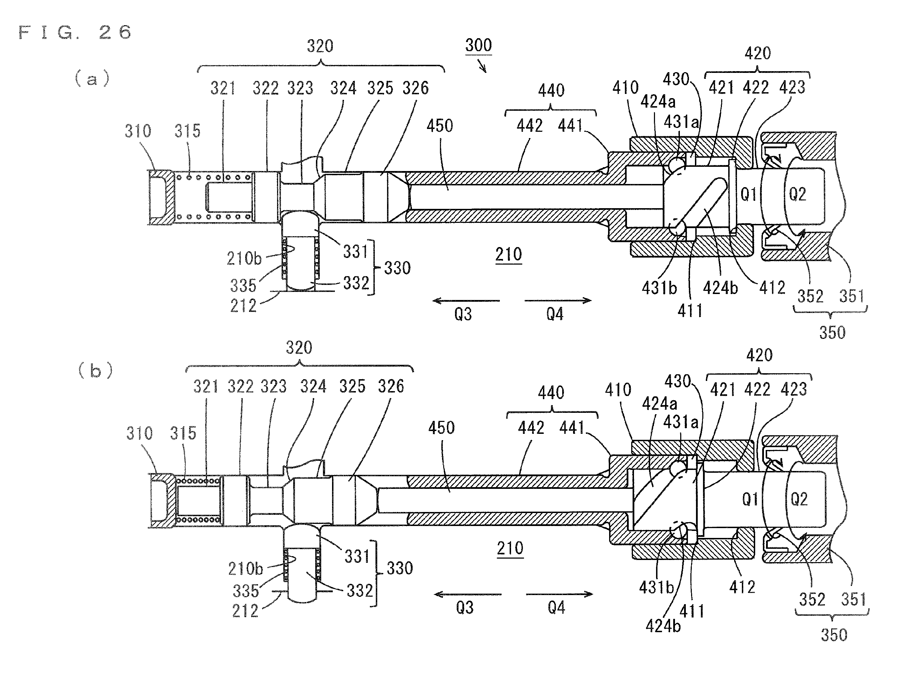

Figs. 26(a) and 26(b) are diagrams for explaining the operation of the switching mechanism 300. Fig. 26(a) shows the switching mechanism 300 in the rotatable state, and Fig. 26(b) shows the switching mechanism 300 in the rotation blocked state. In Figs. 26(a) and 26(b), one direction in the axial direction is a third direction Q3, and the other direction is a fourth direction Q4. The third direction Q3 is a direction in which the moving member 320 comes closer to the spring engaging member 310, and the fourth direction Q4 is a direction in which the moving member 320 moves away from the spring engaging member 310.

As shown in Fig. 26(a), in the rotatable state, the flange portion 422 of the rotation member 420 abuts against the step 412 of the cover member 410, and the bar-shaped member 450 is stored in the holding member 440. In this case, the pressure receiving portion 326 of the moving member 320 abuts against one end of the holding member 440, and the first abutment portion 323 of the moving member 320 is positioned on the extending line of the through hole 210b of the shaft member 210. Thus, the abutment portion 331 of the fitting member 330 abuts against the first abutment portion 323 of the moving member 320, and the fitting portion 332 is stored in the through hole 210b. The position of the fitting member 330 of Fig. 26(a) is an example of a rotatable position.

As shown in Fig. 26(b), in the rotation blocked state, the flange portion 422 of the rotation member 420 abuts against the annular member 430, and the bar-shaped member 450 projects from the one end of the holding member 440 in the third direction Q3. In this case, the second abutment portion 325 of the moving member 320 is positioned on the extending line of the through hole 210b of the shaft member 210. Thus, the abutment portion 331 of the fitting member 330 abuts against the second abutment portion 325 of the moving member 320, and the fitting portion 332 of the fitting member 330 projects from the outer peripheral surface of the cam attachment portion 212 of the shaft member 210. Therefore, the fitting portion 332 of the fitting member 330 is fitted into the recess 232 of the exhaust cam 230 (Figs. 22(a) and 22(b)). The position of the fitting member 330 of Fig. 26(b) is an example of the rotation blocked position.

The switching mechanism 300 is in the rotation blocked state of Fig. 26(b) before the start-up of the engine 10. At the time of the start-up of the engine 10, the crankshaft 13 is rotated in the reverse direction, and the shaft member 210 is rotated in the second direction Q2. Each portion of the switching mechanism 300 except for the sliding mechanism 350 is rotated in the second direction Q2 together with the shaft member 210. In this case, the friction force in the first direction Q1 is exerted from the sliding member 352 of the sliding mechanism 350 onto the sliding portion 423 of the rotation member 420. Therefore, the rotation member 420 is rotated in the first direction Q1 with respect to the shaft member 210 and is moved in the fourth direction Q4 along the axial direction. The flange portion 422 of the rotation member 420 abuts against the step 412 of the cover member 410, so that the rotation in the first direction Q1 and the movement in the fourth direction Q4 of the rotation member 420 are blocked.

When the rotation member 420 is moved in the fourth direction Q4, the moving member 320 and the bar-shaped member 450 are moved in the fourth direction Q4 by the energizing force of the spring 315. Thus, the bar-shaped member 450 is stored in the holding member 440, and the pressure receiving portion 326 of the moving member 320 abuts against the one end of the holding member 440. Further, the abutment portion 331 of the fitting member 330 abuts against the first abutment portion 323 of the moving member 320 by the energizing force of the spring 335. Thus, the fitting portion 332 of the fitting member 330 is stored in the through hole 210b of the shaft member 210. In this manner, the switching mechanism 300 switches from the rotation blocked state of Fig. 26(b) to the rotatable state of Fig. 26(a).

Thereafter, the rotation direction of the crankshaft 13 is switched from the reverse direction to the forward direction, and the shaft member 210 is rotated in the first direction Q1. However, as shown in Fig. 25(a), the fitting pin 217 is not abutting against the one end DA of the groove 231 of the exhaust cam 230 and the recess 232 of the exhaust cam 230 is not positioned on the extending line of the through hole 210b of the shaft member 210 right after the rotation direction of the crankshaft 13 is switched from the reverse direction to the forward direction. Therefore, the fitting portion 332 of the fitting member 330 is kept in the state of being stored in the through hole 210b of the shaft member 210.

As shown in Fig. 25(b), when the fitting pin 217 abuts against the one end DA of the groove 231 of the exhaust cam 230, the switching mechanism 300 switches from the rotatable state of Fig. 26(a) to the rotation blocked state of Fig. 26(b). Specifically, the shaft member 210 is rotated in the first direction Q1, so that friction force in the second direction Q2 is exerted from the sliding member 352 of the sliding mechanism 350 onto the sliding portion 423 of the rotation member 420. Therefore, the rotation member 420 is rotated in the second direction Q2 with respect to the shaft member 210 and is moved in the third direction Q3 along the axial direction. The rotation in the second direction Q2 and the movement in the third direction Q3 of the rotation member 420 are blocked by the abutment of the flange portion 422 of the rotation member 420 against the annular member 430.

The rotation member 420 is moved in the third direction Q3, so that the one end of the bar-shaped member 450 projects from the holding member 440 in the third direction Q3. This causes the moving member 320 to be moved in the third direction Q3 and the movement blocking portion 321 of the moving member 320 to abut against the spring engaging member 310. Further, the abutment portion 331 of the fitting member 330 is pressed in the direction away from the axial center of the shaft member 210 by the tapered portion 324 of the moving member 320. Thus, the fitting member 330 is moved against the energizing force of the spring 335 in the direction away from the axial center of the shaft member 210, and the fitting portion 332 of the fitting member 330 projects externally of the through hole 210b. This causes the fitting portion 332 of the fitting member 330 to fit into the recess 232 of the exhaust cam 230 (Figs. 22(a) and 22(b)). In this manner, the switching mechanism 300 switches from the rotatable state of Fig. 26(a) to the rotation blocked state of Fig. 26(b).

### (5-6) Another Example of Switching Mechanism

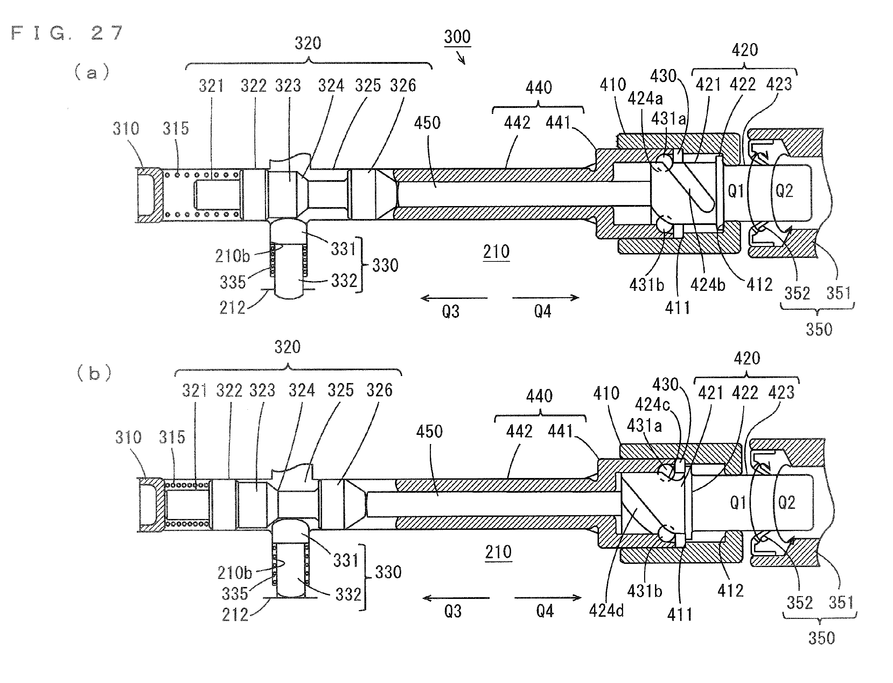

Figs. 27(a) and 27(b) are diagrams for explaining another example of the switching mechanism 300. As for the switching mechanism 300 of Figs. 27(a) and 27(b), differences from the examples of Figs. 26(a) and 26(b) will be described. In the switching mechanism 300 of Figs. 27(a) and 27(b), the outer diameter of the first abutment portion 323 of the moving member 320 is larger than the outer diameter of the second abutment portion 325. The tapered portion 324 is formed such that an outer diameter gradually decreases from the first abutment portion 323 towards the second abutment portion 325. Thus, the outer peripheral surface of the first abutment portion 323 and the outer peripheral surface of the second abutment portion 325 are connected via the outer peripheral surface of the tapered portion 324.

As shown in Fig. 27(a), in a state in which the abutment portion 331 of the fitting member 330 is abutting against the first abutment portion 323 of the moving member 320, the fitting portion 332 of the fitting member 330 projects from the outer peripheral surface of the cam attachment portion 212 of the shaft member 210. Thus, the switching mechanism 300 enters the rotation blocked state. On the other hand, as shown in Fig. 27(b), in a state in which the abutment portion 331 of the fitting member 330 is abutting against the second abutment portion 325 of the moving member 320, the fitting portion 332 of the fitting member 330 is stored in the through hole 210b of the shaft member 210. Thus, the switching mechanism 300 enters the rotatable state.

Spiral grooves 424c, 424d are formed at the outer peripheral surface of the ball receiving portion 421 of the rotation member 420 instead of the grooves 424a, 424b of Figs. 26(a) and 26(b). Regarding to the axial center of the rotation member 420, a direction of the spiral of the groove 424c is opposite to a direction of the spiral of the groove 424a, and a direction of the spiral of the groove 424d is opposite to a direction of the spiral of the groove 424b. The ball member 431a is fitted into the groove 424c, and the ball member 431b is fitted into the groove 424d.

In this case, the rotation member 420 is rotated in the first direction Q1 with respect to the shaft member 210, so that the rotation member 420 is moved in the third direction Q3. On the other hand, the rotation member 420 is rotated in the second direction Q2 with respect to the shaft member 210, so that the rotation member 420 is moved in the fourth direction Q4.

The switching mechanism 300 is in the rotation blocked state of Fig. 27(a) before the start-up of the engine 10. At the time of the start-up of the engine 10, the crankshaft 13 is rotated in the reverse direction, and the shaft member 210 is rotated in the second direction Q2. This causes the friction force in the first direction Q1 to be exerted from the sliding member 352 of the sliding mechanism 350 onto the sliding portion 423 of the rotation member 420. Therefore, the rotation member 420 is rotated in the first direction Q1 with respect to the shaft member 210 and is moved in the third direction Q3 along the axial direction.

The rotation member 420 is moved in the third direction Q3, so that the one end of the bar-shaped member 450 projects from the holding member 440 in the third direction Q3. This causes the moving member 320 to be moved in the third direction Q3 and the movement blocking portion 321 of the moving member 320 to abut against the spring engaging member 310. Further, the abutment portion 331 of the fitting member 330 abuts against the second abutment portion 325 of the moving member 320 by the energizing force of the spring 335. This causes the fitting member 330 to be stored in the through hole 210b of the shaft member 210. In this manner, the switching mechanism 300 switches from the rotation blocked state of Fig. 27(a) to the rotatable state of Fig. 27(b).

Thereafter, when the rotation direction of the crankshaft 13 is switched from the reverse direction to the forward direction, the shaft member 210 is rotated in the first direction Q1. This causes the friction force in the second direction Q2 to be exerted from the sliding member 352 of the sliding mechanism 350 onto the sliding portion 423 of the rotation member 420. As shown in Fig. 25(b), when the fitting pin 217 abuts against the one end of the groove 231, the rotation member 420 is rotated in the second direction Q2 with respect to the shaft member 210 and is moved in the fourth direction Q4 along the axial direction.

When the rotation member 420 is moved in the fourth direction Q4, the moving member 320 and the bar-shaped member 450 are moved in the fourth direction Q4 by the energizing force of the spring 315. This causes the bar-shaped member 450 to be stored in the holding member 440 and the pressure receiving portion 326 of the moving member 320 to abut against the one end of the holding member 440. Further, the abutment portion 331 of the fitting member 330 is pressed by the tapered portion 324 of the moving member 320 in a direction away from the axial center of the shaft member 210. Thus, the fitting member 330 is moved against the energizing force of the spring 335 in the direction away from the axial center of the shaft member 210, and the fitting portion 332 of the fitting member 330 projects externally of the through hole 210b. As a result, the fitting portion 332 of the fitting member 330 is fitted into the recess 232 of the exhaust cam 230 (Figs. 22(a) and 22(b)). In this manner, the switching mechanism 300 switches from the rotatable state of Fig. 27(b) to the rotation blocked state of Fig. 27(a).

### (6) Effects

In the engine system 200 according to the present embodiment, the crank angle is adjusted to be near the angle A30 by the forward rotation of the crankshaft 13 after the stop and before the start-up of the engine 10, and the crankshaft 13 is rotated in the reverse direction at the time of the start-up of the engine 10. During the reverse rotation of the crankshaft 13, the intake port 21 is opened and the fuel-air mixture is introduced into the combustion chamber 31 a when the crank angle is in the range from the angle A21 to the angle A22. In this case, even if there are variations in the crank angle at the time of the stop of the engine 10, because the crank angle is first adjusted in a constant range, the crank angle reliably passes through the range from the angle A21 to the angle A22 during the reverse rotation of the crankshaft 13. Thus, the fuel-air mixture can be reliably introduced into the combustion chamber 31 a.

Thereafter, when the crank angle reaches the angle A31, the fuel-air mixture in the combustion chamber 31a is ignited. Thus, an explosion occurs in the combustion chamber 31a, the crankshaft 13 is driven to be rotated in the forward direction by the energy generated by the explosion. Thus, the crankshaft 13 can easily go over the angle A2 corresponding to the compression top dead center. Therefore, the engine 10 can be stably and quickly started.

Further, because it is possible to obtain a sufficient torque for the start-up of the engine 10 by the ignition of the fuel-air mixture without using the large-size starter/generator 14, the size of the engine 10 can be reduced. Further, because it is not necessary to use the large-size starter/generator 14, generation of excessive electric power (a power loss) can be inhibited.

Further, in the present embodiment, the angle A30 is set in the range from the angle A13 to the angle A2 in the forward direction. Thus, the rotation speed of the crankshaft 13 is sufficiently increased at a time point at which the crankshaft 13 reaches the angle A21. Therefore, the fuel-air mixture can be sufficiently introduced into the combustion chamber 31a in the range from the angle A21 to the angle A22.

Further, in the present embodiment, the intake port 21 is opened in the range from the angle A21 to the angle A22 only during the reverse rotation of the crankshaft 13, and the intake port 21 is not opened in the range from the angle A21 to the angle A22 during the forward rotation of the crankshaft 13. Thus, the fuel-air mixture can be led into the combustion chamber 31a during the reverse rotation of the crankshaft 13 while the combusted gas is prevented from flowing backward to the intake passage 22 during the forward rotation of the crankshaft 13.

Further, the exhaust is performed in the range from the angle A15 to the angle A16 during the forward rotation of the crankshaft 13, the intake is performed in the range from the angle A21 to the angle A22 during the reverse rotation of the crankshaft 13 and the range from the angle A21 to the angle A22 is included in the range from the angle A15 to the angle A16. Thus, the exhaust during the forward rotation and the intake during the reverse rotation can be respectively appropriately performed.

Further, in the present embodiment, the fuel is injected into the intake passage 22 by the injector 19 before the intake port 21 is opened during the reverse rotation of the crankshaft 13. Thus, the intake port 21 is opened after the fuel-air mixture is produced in the intake passage 22. As a result, the produced fuel-air mixture can be efficiently introduced into the combustion chamber 31a.

Further, in the present embodiment, when the current crank angle is stored after the stop and before the start-up of the engine 10, the crankshaft 13 is rotated in the forward direction such that the crank angle reaches the angle A30 based on the detection result of the crank angle sensor 43. Thus, the crank angle can be accurately adjusted to the angle A30.

Further, in the present embodiment, when the current crank angle is not stored after the stop and before the start-up of the engine 10, the crankshaft 13 is rotated in the forward direction for a constant time period by a torque that is determined in advance such that the piston 11 does not reach the compression top dead center. Thus, the crank angle can be adjusted to be near the angle A30.

Further, in the present embodiment, the fuel-air mixture in the combustion chamber 31a is ignited by the ignition plug 18 after the rotation of the crankshaft 13 in the reverse direction is stopped at the angle A31. Thus, the crankshaft 13 can be reliably rotated in the forward direction after the ignition of the fuel-air mixture.

Further, in the present embodiment, the crankshaft 13 is driven in the forward direction by the starter/generator 14 after the ignition of the fuel-air mixture at the angle A31. Thus, the larger torque in the forward direction is obtained. Therefore, the piston 11 can reliably go over the compression top dead center.

### (7) Other Embodiments

### (7-1)

In the above-mentioned embodiment, the angle A30 is set in a range from the angle A13, that is the end of the range of the crank angle at which the intake port 23 is to be opened in the forward direction, to the angle A2 corresponding to the compression top dead center, as a reverse rotation starting range, however, the present invention is not limited to this. For example, the angle A30 may be set in a range from the angle A0 corresponding to the exhaust top dead center to the angle A13. Also in this case, during the reverse rotation of the crankshaft 13, the rotation speed of the crankshaft 13 may be increased by the time when the crank angle passes through the range from the angle A21 to the angle A22 and when the crank angle reaches the angle A21. Thus, the fuel-air mixture can be appropriately introduced into the combustion chamber 31 a, and the engine 10 can be appropriately started.

### (7-2)

In the above-mentioned embodiment, the fuel is injected into the intake passage 22 by the injector 19 with the intake port 21 being closed and the intake port 21 is thereafter opened, whereby the fuel is led into the combustion chamber 31a from the intake passage 22 through the intake port 21, however, the present invention is not limited to this. The fuel may be directly injected into the combustion chamber 31a by the injector 19 through the intake port 21 with the intake port 21 being open.

### (7-3)

While the constant angle A30 is set as the reverse rotation starting range in the above-mentioned embodiment, the present invention is not limited to this. The constant angle range may be set as the reverse rotation starting range.

### (7-4)

While the camshaft is used as the valve driver 17 in the above-mentioned embodiment, the present invention is not limited to this. A hydraulic valve mechanism or an electromagnetic valve mechanism or the like, for example, may be used as the valve driver 17.

### (7-5)

While the rotation angle in the range of the two rotations (720 degrees) of the crankshaft 13 is obtained based on the crank angle detected by the crank angle sensor 43 and the pressure in the intake passage 22 detected by the intake pressure sensor 42 in the above-mentioned embodiment, the present invention is not limited to this. For example, the cam angle sensor that detects the rotation angle of the valve driver 17 (hereinafter referred to as a cam angle) may be provided, and the rotation angle in the range of the two rotations of the crankshaft 13 may be obtained based on the detection result of the cam angle sensor. Alternatively, the rotation angle in the range of the two rotations of the crankshaft 13 may be obtained based on the crank angle detected by the crank angle sensor 43 and the cam angle detected by the cam angle sensor. In this case, more accurate rotation angle can be obtained in the range of the two rotations of the crankshaft 13.

### (7-6)

While the current flowing in the starter/generator 14 is detected by the current sensor 44 in the above-mentioned embodiment, the current sensor 44 does not have to be provided if the starter/generator 14 can be appropriately controlled.

### (7-7)

While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like.

(8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the engine system 200 is an example of an engine system, the engine unit EU is an example of an engine unit, the engine 10 is an example of an engine, the ECU 6 is an example of a controller, the intake passage 22 is an example of an intake passage, the combustion chamber 31a is an example of a combustion chamber, the injector 19 is an example of a fuel injection device and the ignition plug 18 is an example of an ignition device. Further, the intake port 21 is an example of an intake port, the exhaust port 23 is an example of an exhaust port, the intake valve 15 is an example of an intake valve, the exhaust valve 16 is an example of an exhaust valve, the valve driver 17 is an example of a valve driver, the crankshaft 13 is an example of a crankshaft, the starter/generator 14 is an example of a rotation driver, the piston 11 is an example of a piston and the crank angle sensor 43 is an example of a crank angle detector.

Further, the motorcycle 100 is an example of a saddle-straddling type motor vehicle, the rear wheel 7 is an example of a drive wheel and the vehicle body 1 is an example of a main body.

As each of constituent elements recited in the claims, various other elements having configurations or functions described in the claims can be also used.

### INDUSTRIAL APPLICABILITY

The present invention can be effectively utilized for various types of vehicles.

## Claims

1. An engine system (200), comprising:
an engine unit (EU) that includes an engine (10) and a rotation driver (14); and
a controller (6) configured to control the engine unit (EU), wherein
the engine (10) includes
a cylinder (31),
an intake passage (22) arranged to lead air to a combustion chamber (31 a) of the cylinder (31),
a fuel injection device (19) arranged to inject fuel into the intake passage (22);
an ignition device (18) configured to ignite a fuel-air mixture in the combustion chamber (31 a), and
a valve driver (17) configured to respectively drive an intake valve (15) for opening and closing an intake port (21) and an exhaust valve (16) for opening and closing an exhaust port (23),
the rotation driver (14) configured to drive a rotation of a crankshaft (13) of the engine (10) in a forward direction (R1) or a reverse direction (R2),
the valve driver (17) configured to drive the intake valve (15) such that the intake port (21) is opened when a crank angle is in a predetermined start-up intake range (A21-A22), during the rotation of the crankshaft (13) in the reverse direction (R2), and
the controller (6) configured to
control the rotation driver (14) such that the crankshaft (13) is rotated in the forward direction (R1) until the crank angle reaches a predetermined reverse rotation starting range (A30), after a stop and before a start-up of the engine (10), and
control the rotation driver (14) such that the crankshaft (13) is rotated in the reverse direction (R2) until the crank angle goes over the start-up intake range (A21-A22) from the reverse rotation starting range (A30) and reaches a predetermined start-up ignition range (A31), control the fuel injection device (19) such that the fuel-air mixture is introduced into the combustion chamber (31a) from the intake passage (22) through the intake port (21) when the crank angle is in the start-up intake range (A21-A22), and control the ignition device (18) such that the fuel-air mixture in the combustion chamber (31a) is ignited when the crank angle is in the start-up ignition range (A31), at a time of the start-up of the engine (10).

2. The engine system (200) according to claim 1, wherein
the reverse rotation starting range (A30) is in a range from a crank angle at which a piston (11) is at an exhaust top dead center (A0) to a crank angle at which the piston (11) is at a compression top dead center (A2) in the forward direction (R1),
the start-up intake range (A21-A22) is in a range from the crank angle at which the piston (11) is at the exhaust top dead center (A0) to a crank angle at which the piston (11) is at an expansion bottom dead center (A3) in the reverse direction (R2), and
the start-up ignition range (A31) is in a range from the crank angle at which the piston (11) is at the expansion bottom dead center (A3) to the crank angle at which the piston (11) is at the compression top dead center (A2) in the reverse direction (R2).

3. The engine system (200) according to claim 1 or 2, wherein
the valve driver (17) is configured to not drive the intake valve (15) when the crank angle is in the start-up intake range (A21-A22), during the rotation of the crankshaft (13) in the forward direction (R1).

4. The engine system (200) according to any one of claims 1 to 3, wherein
the valve driver (17) is configured to drive the exhaust valve (16) such that the exhaust port (23) is opened when the crank angle is in a normal exhaust range (A15-A16), and drive the intake valve (15) such that the intake port (21) is opened when the crank angle is in a normal intake range (A12-A13), during the rotation of the crankshaft (13) in the forward direction (R1), and
the start-up intake range (A21-A22) is included in the normal exhaust range (A15-A16).

5. The engine system (200) according to claim 4, wherein
the reverse rotation starting range (A30) is in a range from a crank angle at an end of the normal intake range (A12-A13) to the crank angle at which the piston (11) is at the compression top dead center (A2) in the forward direction (R1).

6. The engine system (200) according to any one of claims 1 to 5, wherein
the controller (6) is configured to control the fuel injection device (19) such that the fuel is injected into the intake passage (22) before the intake port (21) is opened or during a period in which the intake port (21) is opened, during the rotation of the crankshaft (13) in the reverse direction (R2).

7. The engine system (200) according to any one of claims 1 to 6, further comprising a crank angle detector (43) configured to detect the crank angle, wherein
the controller (6) is configured to adjust the crank angle in the reverse rotation starting range (A30) by rotating the crankshaft (13) in the forward direction (R1) based on a detection result of the crank angle detector (43).

8. The engine system (200) according to any one of claims 1 to 7, wherein
the controller (6) is configured to adjust the crank angle in the reverse rotation starting range (A30) by rotating the crankshaft (13) in the forward rotation for a constant time period by a torque that is determined in advance such that the piston (11) does not reach the compression top dead center (A2).

9. A saddle-straddling type motor vehicle comprising:
a main body (1) that has a drive wheel (7); and
the engine system (200) according to any one of claims 1 to 8 configured to generate motive power for rotating the drive wheel (7).
